# EUROPEAN PATENT APPLICATION

(11) **EP 4 722 851 A1**
(43) Date of publication of application: **08.04.2026**
(21) Application number: 24832223.2
(22) Date of filing: 03.05.2024
(51) Int. Cl.: G06F 1/16, G02B 1/14, C09J 9/00, B32B 37/12

(54) **ELECTRONIC DEVICE INCLUDING STRUCTURE FOR REDUCING DAMAGE TO FLEXIBLE DISPLAY**

(30) Priority: 30.06.2023 KR 20230085367; 18.08.2023 KR 20230108642
(71) Applicant: Samsung Electronics Co., Ltd., Suwon-si, Gyeonggi-do 16677 (KR)
(72) Inventor: AHN, Sungho, Suwon-si Gyeonggi-do 16677 (KR); JUNG, Jihyung, Suwon-si Gyeonggi-do 16677 (KR); LEE, Soyoung, Suwon-si Gyeonggi-do 16677 (KR)
(74) Representative: Gulde & Partner
(86) International application number: PCT/KR2024/006030
(87) International publication number: WO 2025/005439

(57) **Abstract**

An electronic device according to an embodiment may comprise: a first housing; a second housing which is movable with respect to the first housing; and a flexible display at least a part of which is deformable according to movement of the second housing and which includes a display panel and a plurality of layers disposed on the display panel. The plurality of layers may comprise: a first window which includes a first surface facing the display panel; and a second window which has lower rigidity than the rigidity of the first window and includes a second surface facing the display panel. The characteristics of a first adhesive layer disposed on the first surface may be different from the characteristics of a second adhesive layer disposed on the second surface.

## Description

### [Technical Field]

Various embodiments described below relate to an electronic device including a structure for reducing damage to a flexible display.

### [Background Art]

In order for a user to easily carry an electronic device, the electronic device may be miniaturized. Despite the miniaturization of the electronic device, there is an increasing need for an electronic device in which a size of a display for displaying contents may be changeable so that the user may be provided with various contents through the electronic device. For example, the electronic device may include a flexible display, a size of the display exposed to the outside of the electronic device being changeable as the electronic device operates. The electronic device may require a structure for reducing damage to the flexible display, the size of the display exposed to the outside of the electronic device being changeable as the electronic device operates.

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

According to an embodiment, an electronic device may include a first housing, a second housing movable with respect to the first housing, and a flexible display at least partially deformable according to movement of the second housing and including a display panel and a plurality of layers disposed on the display panel. The plurality of layers may include a plurality of windows including a first window including a first surface facing the display panel, and a second window having a rigidity lower than a rigidity of the first window and including a second surface facing the display panel. The plurality of layers may include a plurality of adhesive layers at least partially disposed between the plurality of windows and including a first adhesive layer and a second adhesive layer. Properties of the first adhesive layer disposed on the first surface of the first window may be different from properties of the second adhesive layer disposed on the second surface of the second window.

According to an embodiment, an electronic device may include a first housing, a second housing movable with respect to the first housing, and a flexible display at least partially deformable according to movement of the second housing and including a display panel and a plurality of layers disposed on the display panel. The plurality of layers may include a plurality of windows including a first window including a first surface facing the display panel, and a second window having a rigidity lower than a rigidity of the first window and including a second surface facing the display panel. The plurality of layers may include a plurality of adhesive layers at least partially disposed between the plurality of windows and including a first adhesive layer and a second adhesive layer. A thickness of the first adhesive layer disposed on the first surface of the first window may be greater than a thickness of the second adhesive layer disposed between the second surface of the second window, and a third surface opposite to the first surface of the first window.

### [Description of the Drawings]

FIG. 1 is a block diagram of an electronic device in a network environment according to various embodiments.
FIG. 2A is a top plan view of an exemplary electronic device in a first state.
FIG. 2B is a bottom view of an exemplary electronic device in a first state.
FIG. 2C is a top plan view of an exemplary electronic device in a second state.
FIG. 2D is a bottom view of an exemplary electronic device in a second state.
FIGS. 3A and 3B are exploded perspective views of an exemplary electronic device.
FIG. 4A is a cross-sectional view of an exemplary electronic device in a first state.
FIG. 4B is a cross-sectional view of an exemplary electronic device in a second state.
FIG. 5 is a partial cross-sectional view of an exemplary electronic device cut along line A-A' of FIG. 2A.
FIGS. 6A and 6B are partial cross-sectional views of a flexible display of an exemplary electronic device.
FIG. 7A is a partial cross-sectional view of an exemplary electronic device.
FIGS. 7B and 7C illustrate a portion of a flexible display of the exemplary electronic device.
FIG. 8A is a partially exploded perspective view of an exemplary electronic device.
FIG. 8B is a top plan view of a flexible display of the exemplary electronic device.
FIG. 8C illustrates a portion of the exemplary electronic device.

### [Mode for Invention]

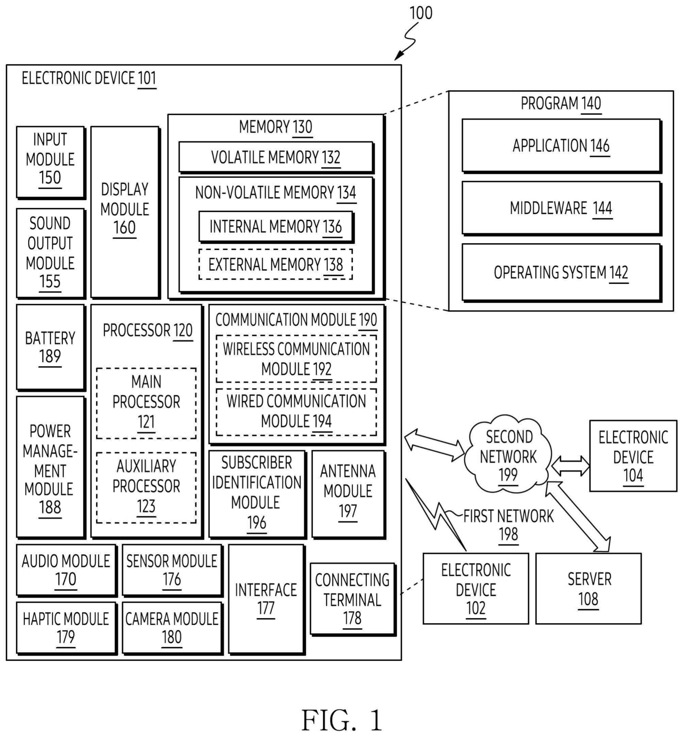

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

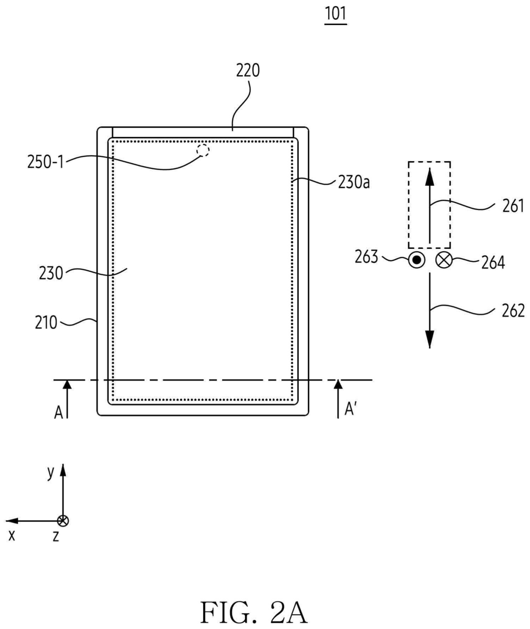

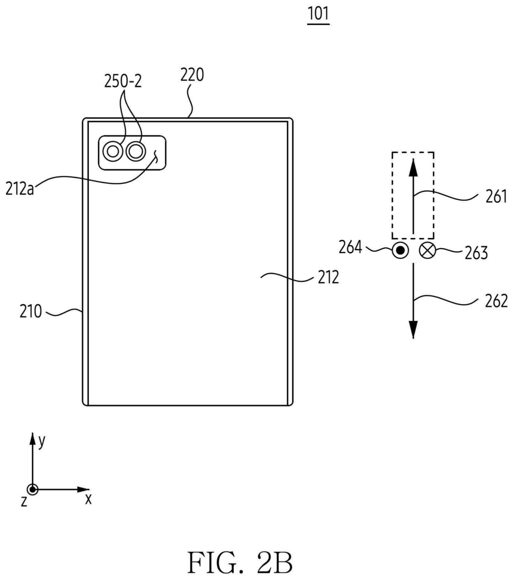

For example, the display of the display module 160 may be flexible. For example, the display may include a display region exposed outside a housing of the electronic device 101, providing at least a portion of an outer surface of the electronic device 101. For example, since the display has flexibility, at least a portion of the display may be rollable into the housing or slidable into the housing. For example, a size of the display region may vary according to a size of the at least a portion of the display rolled into the housing or slid into the housing. For example, the electronic device 101 including the display may be in a plurality of states, including a first state providing the display region having a first size and a second state providing the display region having a second size different from the first size. For example, the first state may be exemplified through description of FIGS. 2A and 2B.

FIG. 2A is a top plan view of an exemplary electronic device in a first state.

Referring to FIG. 2A, an electronic device 101 may include a housing 200 that includes a first housing 210, and a second housing 220 that is movable relative to the first housing 210 in a first direction 261 parallel to a y-axis or a second direction 262 parallel to the y-axis and opposite to the first direction 261, and a display 230 (e.g., the display).

For example, the electronic device 101 may be in the first state. For example, in the first state, the second housing 220 may be movable relative to the first housing 210 in the first direction 261 among the first direction 261 and the second direction 262. For example, in the first state, the second housing 220 may not be movable relative to the first housing 210 in the second direction 262 opposite to the first direction 261.

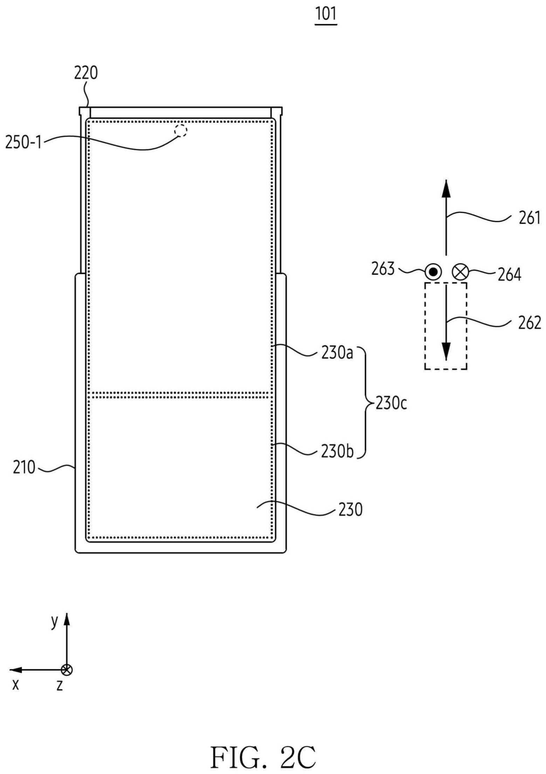

For example, in the first state, the display 230 may provide the display region having the smallest size. For example, in the first state, the display region may correspond to a region 230a. For example, although not illustrated in FIG. 2A, in the first state, a region (e.g., a region 230b of FIG. 2C) of the display 230 different from the region 230a that is the display region may be positioned in the first housing 210. For example, in the first state, the region (e.g., the region 230b of FIG. 2C) may be covered by the first housing 210. For example, in the first state, the region (e.g., the region 230b of FIG. 2C) may be rolled into the first housing 210. For example, in the first state, the region 230a may include a planar portion, unlike the region (e.g., the region 230b of FIG. 2C) including a curved portion. However, it is not limited thereto. For example, in the first state, the region 230a may include a curved portion extending from the planar portion and positioned in an edge portion.

For example, the first state may be referred to as a slide-in state or a closed state in terms of at least a portion of the second housing 220 being positioned in the first housing 210. For example, the first state may be referred to as a reduced state in terms of providing the display region having the smallest size. However, it is not limited thereto.

For example, the first housing 210 may include a first image sensor 250-1 in a camera module 180, visually exposed through a portion of the region 230a and facing a third direction 263 parallel to a z-axis. For example, the camera module 180 may be disposed to perform its function without being visually exposed through the portion of the region 230a in an internal space of the electronic device. For example, although not illustrated in FIG. 2A, the second housing 220 may include one or more second image sensors in the camera module 180, exposed through a portion of the second housing 220 and facing in a fourth direction 264 parallel to the z-axis and opposite to the third direction 263. For example, the one or more second image sensors may be exemplified through a description of FIG. 2B.

FIG. 2B is a bottom view of an exemplary electronic device in a first state.

Referring to FIG. 2B, in the first state, one or more second image sensors 250-2 disposed in the second housing 220 may be positioned within a structure disposed in the first housing 210 for the one or more second image sensors 250-2. For example, in the first state, light from an outside of the electronic device 101 may be received by the one or more second image sensors 250-2 through the structure. For example, since the one or more second image sensors 250-2 are positioned in the structure in the first state, the one or more second image sensors 250-2 may be exposed through the structure in the first state. For example, the structure may be implemented in various ways. For example, the structure may be an opening or a notch. For example, the structure may be an opening 212a in a plate 212 of the first housing 210 surrounding at least a portion of the second housing 220. However, it is not limited thereto. For example, in the first state, the one or more second image sensors 250-2 included in the second housing 220 may be covered by the plate 212 of the first housing 210.

Referring back to FIG. 2A, the first state may be changed to the second state.

For example, the first state (or the second state) may be changed to the second state (or the first state) through one or more intermediate states between the first state and the second state.

For example, the first state (or the second state) may be changed to the second state (or the first state) based on a predefined user input. For example, the first state (or the second state) may be changed to the second state (or the first state) in response to a user input to a physical button exposed through a portion of the first housing 210 or a portion of the second housing 220. For example, the first state (or the second state) may be changed to the second state (or the first state) in response to a touch input to an executable object displayed within the display region. For example, the first state (or the second state) may be changed to the second state (or the first state) in response to a touch input having a contact point on the display region and having a pressing intensity of more than a reference intensity. For example, the first state (or the second state) may be changed to the second state (or the first state) in response to a voice input received through a microphone of the electronic device 101. For example, the first state (or the second state) may be changed to the second state (or the first state) in response to an external force applied to the first housing 210 and/or the second housing 220 to move the second housing 220 relative to the first housing 210. For example, the first state (or the second state) may be changed to the second state (or the first state) in response to a user input identified on an external electronic device (e.g., earbuds or smart watch) connected to the electronic device 101. However, it is not limited thereto.

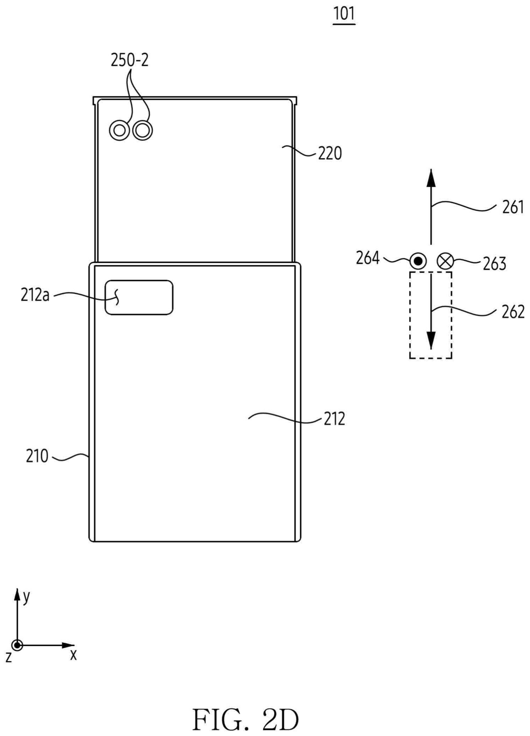

The second state may be exemplified through a description of FIGS. 2C and 2D.

FIG. 2C is a top plan view of an exemplary electronic device in a second state.

Referring to FIG. 2C, the electronic device 101 may be in the second state. For example, in the second state, the second housing 220 may be movable relative to the first housing 210 in the second direction 262 among the first direction 261 and the second direction 262. For example, in the second state, the second housing 220 may not be movable relative to the first housing 210 in the first direction 261 opposite to the second direction 262.

For example, in the second state, the display 230 may provide the display region having the largest size. For example, in the second state, the display region may correspond to a region 230c including the region 230a and the region 230b. For example, the region 230b positioned in the first housing 210 in the first state may be exposed outside the first housing 210 in the second state. For example, in the second state, the region 230a may include a planar portion. However, it is not limited thereto. For example, the region 230a may include a curved portion extending from the planar portion and positioned in an edge portion. For example, in the second state, the region 230b, unlike the region 230a in the first state, may include a planar portion among the planar portion and a curved portion. However, it is not limited thereto. For example, the region 230b may include the curved portion extending from the planar portion of the region 230b and positioned in the edge portion.

For example, the second state may be referred to as a slide-out state or an open state in terms of at least a portion of the second housing 220 being positioned outside the first housing 210. For example, the second state may be referred to as an extended state in terms of providing the display region having the largest size. However, it is not limited thereto.

For example, when a state of the electronic device 101 is changed from the first state to the second state, the first image sensor 250-1 facing the third direction 263 may be moved along with the region 230a according to a movement of the second housing 220 in the second direction 262. For example, although not illustrated in FIG. 2C, when the state of electronic device 101 changes from the first state to the second state, the one or more second image sensors 250-2 facing the fourth direction 264 may be moved according to the movement of the second housing 220 in the second direction 262. For example, a relative positional relationship between the one or more second image sensors 250-2 and the structure in the first housing 210 exemplified through the description of FIG. 2B may be changed according to the movement of the one or more second image sensors 250-2. For example, the change in the relative positional relationship may be exemplified through FIG. 2D.

FIG. 2D is a bottom view of an exemplary electronic device in a second state.

Referring to FIG. 2D, in the second state, the one or more second image sensors 250-2 may be positioned outside the structure (e.g., an opening or a notch) in the first housing 210 exemplified through the description of FIG. 2B. For example, in the second state, the one or more second image sensors 250-2 may be positioned outside the opening 212a in the plate 212. For example, the one or more second image sensors 250-2 may be exposed through the opening 212a in the first state. The one or more second image sensors 250-2 may be exposed by being positioned outside the opening 212a in the second state. For example, since the one or more second image sensors 250-2 are positioned outside the structure in the second state, the relative positional relationship between the one or more second image sensors 250-2 and the structure in the first housing 210 exemplified through the description of FIG. 2B in the second state may be different from the relative positional relationship in the first state.

For example, in a case that the electronic device 101 does not include the structure, such as the opening 212a, the one or more second image sensors 250-2 in the first state may not be exposed outside the housing, but in the second state, the one or more second image sensors 250-2 may be exposed outside the housing.

Although not illustrated in FIGS. 2A, 2B, 2C, and 2D, the electronic device 101 may be in an intermediate state between the first state and the second state. For example, a size of the display region in the intermediate state may be greater than a size of the display region in the first state and smaller than a size of the display region in the second state. For example, the display region in the intermediate state may correspond to a region including the region 230a and a portion of the region 230b. For example, in the intermediate state, the portion of the region 230b may be exposed, and another portion (or a remaining portion) of the region 230b may be covered by the first housing 210 or rollable into the first housing 210. However, it is not limited thereto.

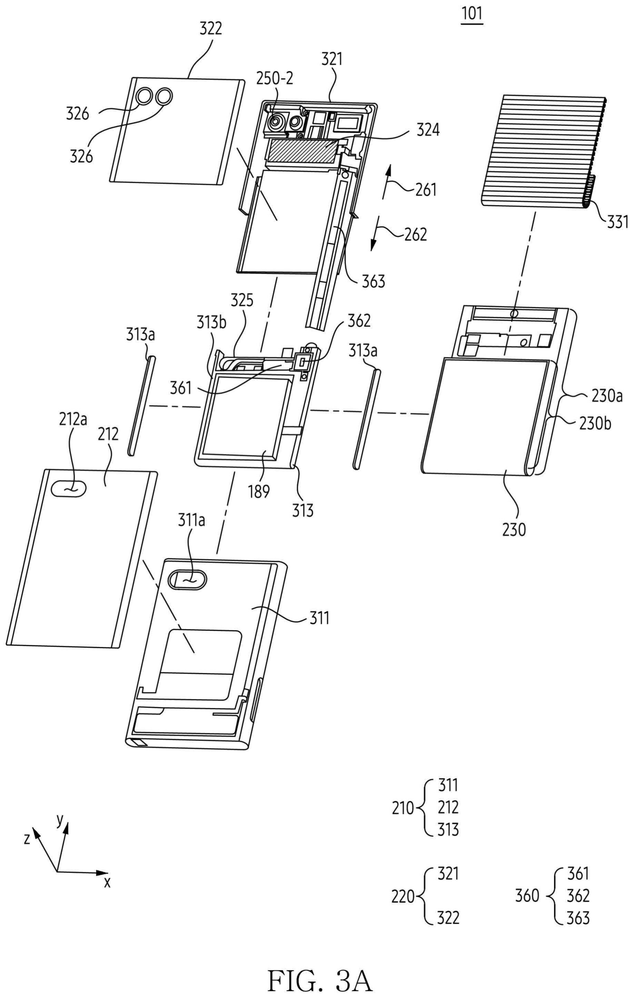

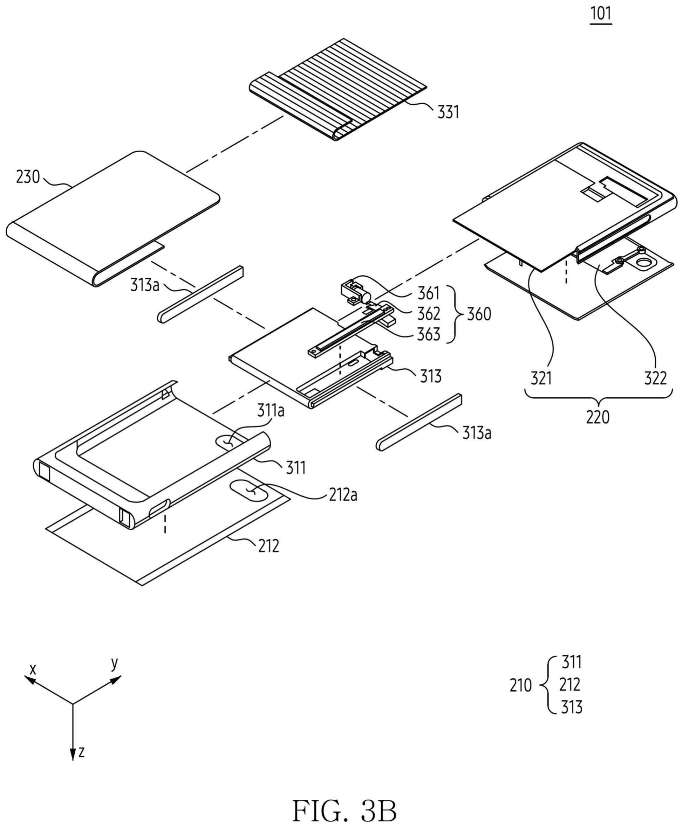

Referring back to FIG. 1, the electronic device 101 may include structures for moving a second housing (e.g., the second housing 220 of FIG. 2A) of the electronic device 101 relative to a first housing (e.g., the first housing 210 of FIG. 2A) of the electronic device 101. For example, the structures may be illustrated through a description of FIGS. 3A and 3B.

FIGS. 3A and 3B are exploded perspective views of an exemplary electronic device.

Referring to FIGS. 3A and 3B, an electronic device 101 may include a housing 200 including a first housing 210 and a second housing 220, a display 230, and a driving unit 360.

For example, the first housing 210 may include a first housing cover 311, a plate 212, and a frame cover 313.

For example, the first housing cover 311 may at least partially form a side portion of an outer surface of the electronic device 101. For example, the first housing cover 311 may at least partially form a rear portion of the outer surface. For example, the first housing cover 311 may include an opening 311a for one or more second image sensors 250-2. For example, the first housing cover 311 may include a surface supporting the plate 212. For example, the first housing cover 311 may be coupled to the plate 212. For example, the first housing cover 311 may include the frame cover 313. For example, the first housing cover 311 may be coupled to the frame cover 313.

For example, the plate 212 may at least partially form the rear portion of the outer surface. For example, the plate 212 may include an opening 212a for the one or more second image sensors 250-2. For example, the plate 212 may be disposed on the surface of the first housing cover 311. For example, the opening 212a may be aligned with the opening 311a when viewed on the Z-axis.

For example, the frame cover 313 may be at least partially surrounded by the first housing cover 311.

For example, the frame cover 313 may be at least partially surrounded by the display 230. For example, the frame cover 313 may be at least partially surrounded by the display 230, but a position of the frame cover 313 may be maintained independently of a movement of the display 230. For example, the frame cover 313 may be arranged in association with at least a portion of components of the display 230. For example, the frame cover 313 may include rails 313a that provide (or guide) a path for movement of at least one component of the display 230.

For example, the frame cover 313 may be coupled to at least one component of the electronic device 101. For example, the frame cover 313 may support a rechargeable battery 189. For example, the battery 189 may be supported through a recess or a hole in a surface 313b of the frame cover 313. For example, the frame cover 313 may be coupled to an end of a flexible printed circuit board (FPCB) 325 on the surface of the frame cover 313. For example, although not explicitly illustrated in FIGS. 3A and 3B, another end of the FPCB 325 may be connected to a PCB 324 through at least one connector. For example, the PCB 324 may be electrically connected to another PCB (not illustrated in FIGS. 3A and 3B) that supplies power to a motor 361 through the FPCB 325.

For example, the frame cover 313 may be coupled to at least one structure of the electronic device 101 for a plurality of states including the first state and the second state. For example, the frame cover 313 may fasten the motor 361 of the driving unit 360.

For example, the second housing 220 may include a front cover 321 and a slide cover 322.

For example, the front cover 321 may be at least partially surrounded by the display 230. For example, the front cover 321 may be coupled to at least a portion of a region 230a of the display 230 surrounding the front cover 321, unlike the frame cover 313, so that the display 230 is moved along the second housing 220 that is moved relative to the first housing 210.

For example, the front cover 321 may be coupled to the at least one component of the electronic device 101. For example, the front cover 321 may be coupled to the printed circuit board (PCB) 324 including the components of the electronic device 101. For example, the PCB 324 may include a processor 120 (not illustrated in FIGS. 3A and 3B). For example, the front cover 321 may include the one or more second image sensors 250-2.

For example, the front cover 321 may be coupled to the at least one structure of the electronic device 101 for the plurality of states including the first state and the second state. For example, the front cover 321 may fasten a rack gear 363 of the driving unit 360.

For example, the front cover 321 may be coupled to the slide cover 322.

For example, the slide cover 322 may be coupled to the front cover 321 to protect the at least one component of the electronic device 101 coupled in the front cover 321 and/or the at least one structure of the electronic device 101 coupled in the front cover 321. For example, the slide cover 322 may include a structure for the at least one component. For example, the slide cover 322 may include one or more openings 326 for the one or more second image sensors 250-2. For example, the one or more openings 326 may be aligned with the one or more second image sensors 250-2 disposed on the front cover 321, when viewed on the Z-axis. For example, a size of each of the one or more openings 326 may correspond to a size of each of the one or more second image sensors 250-2.

For example, the display 230 may include a support member 331. For example, the support member 331 may include a plurality of bars. For example, the plurality of bars may be coupled to each other.

For example, the driving unit 360 may include the motor 361, a pinion gear 362, and the rack gear 363.

For example, the motor 361 may operate based on power from the battery 189. For example, the power may be provided to the motor 361 in response to a predefined user input.

For example, the pinion gear 362 may be coupled to the motor 361 through a shaft. For example, the pinion gear 362 may be rotated based on the operation of the motor 361 transmitted through the shaft.

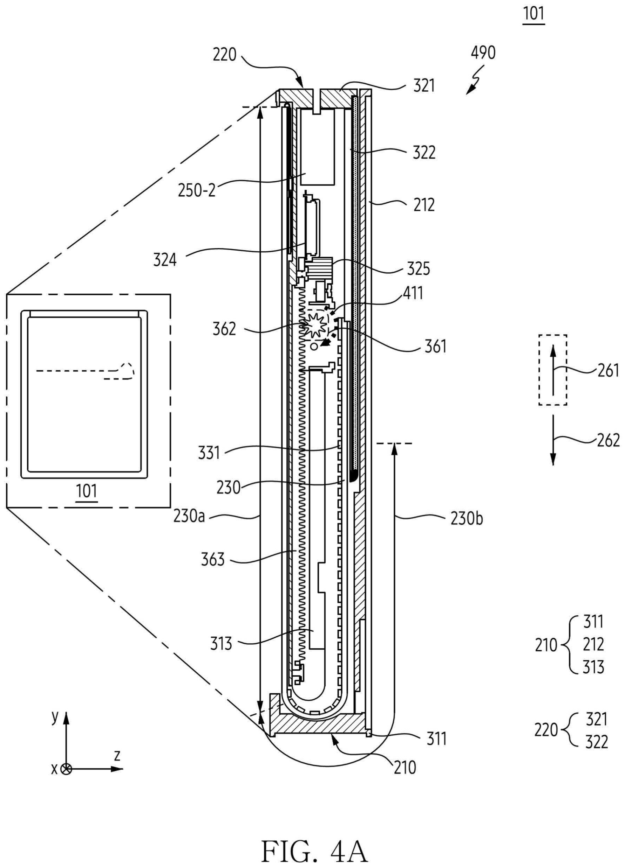

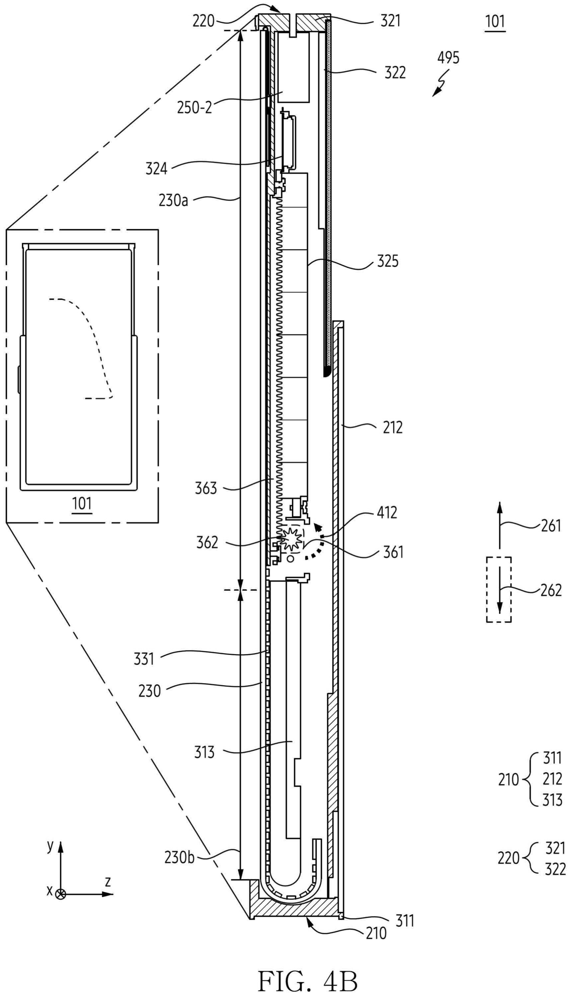

For example, the rack gear 363 may be arranged in association with the pinion gear 362. For example, teeth of the rack gear 363 may be engaged with teeth of the pinion gear 362. For example, the rack gear 363 may be moved in a first direction 261 or a second direction 262 according to rotation of the pinion gear 362. For example, the second housing 220 may be moved in the first direction 261 and the second direction 262 by the rack gear 363 moved according to the rotation of the pinion gear 362 due to the operation of the motor 361. For example, the first state of the electronic device 101 may be changed to another state (e.g., the one or more intermediate states or the second state) different from the first state through the movement of the second housing 220 in the second direction 262. For example, the second state of the electronic device 101 may be changed to another state (e.g., the one or more intermediate states or the first state) different from the second state through the movement of the second housing 220 in the first direction 261. For example, the first state being changed to the second state by the driving unit 360 and the second state being changed to the first state by the driving unit 360 may be exemplified through FIGS. 4A and 4B.

FIG. 4A is a cross-sectional view of an exemplary electronic device in a first state. FIG. 4B is a cross-sectional view of an exemplary electronic device in a second state.

Referring to FIGS. 4A and 4B, a motor 361 may be operated based at least in part on a predefined user input received in a state 490, which is the first state. For example, a pinion gear 362 may be rotated in a first rotation direction 411 based at least in part on the operation of the motor 361. For example, a rack gear 363 may be moved in a first direction 261 based at least in part on the rotation of the pinion gear 362 in the first rotation direction 411. For example, since a front cover 321 in a second housing 220 fastens the rack gear 363, the second housing 220 may be moved in the first direction 261 based at least in part on the movement of the rack gear 363 in the first direction 261. For example, since the front cover 321 in the second housing 220 is coupled to at least a portion of a region 230a of a display 230 and fastens the rack gear 363, the display 230 may be moved based at least in part on the movement of the rack gear 363 in the first direction 261. For example, the display 230 may be moved along rails 313a. For example, a shape of at least a portion of the plurality of bars of a support member 331 of the display 230 may be changed when the state 490 is changed to a state 495, which is the second state.

For example, a region 230b of the display 230 may be moved according to the movement of the display 230. For example, when the state 490 is changed to the state 495 according to the predefined user input, the region 230b may be moved through a space between a first housing cover 311 and a frame cover 313. For example, the region 230b in the state 495 may be exposed, unlike the region 230b rolled into the space in the state 490.

For example, since the front cover 321 in the second housing 220 is coupled to a PCB 324 connected to the other end of a FPCB 325 and fastens the rack gear 363, a shape of the FPCB 325 may be changed when the state 490 is changed to the state 495.

The motor 361 may be operated based at least in part on the predefined user input received in the state 495. For example, the pinion gear 362 may be rotated in a second rotation direction based at least in part on the operation of the motor 361. For example, the rack gear 363 may be moved in a second direction 262 based at least in part on the rotation of the pinion gear 362 in the second rotation direction 412. For example, since the front cover 321 in the second housing 220 fastens the rack gear 363, the second housing 220 may be moved in the second direction 262 based at least in part on the movement of the rack gear 363 in the second direction 262. For example, since the front cover 321 in the second housing 220 is coupled to the at least a portion of the region 230a of the display 230 and fastens the rack gear 363, the display 230 may be moved based at least in part on the movement of the rack gear 363 in the second direction 262. For example, the display 230 may be moved along the rails 313a. For example, the shape of the at least a portion of the plurality of bars of the support member 331 of the display 230 may be changed when the state 495 is changed to the state 490.

For example, the region 230b of the display 230 may be moved according to the movement of the display 230. For example, when the state 495 is changed to the state 490 according to the predefined user input, the region 230b may be moved through the space between the first housing cover 311 and the frame cover 313. For example, the region 230b in the state 490 may be rolled into the space, unlike the region 230b exposed in the state 495.

For example, since the front cover 321 in the second housing 220 is coupled to the PCB 324 connected to the other end of the FPCB 325 and fastens the rack gear 363, the shape of the FPCB 325 may be changed when the state 495 is changed to the state 490.

FIGS. 2A to 4B illustrate the electronic device 101 in which a height of the display region is changed and a width of the display region is maintained when the first state (or the second state) is changed to the second state (or the first state) in a portrait mode, but this is for convenience of explanation. For example, when the first state (or the second state) is changed to the second state (or the first state) in the portrait mode, the electronic device 101 may be implemented such that the height of the display region is maintained and the width of the display region is changed.

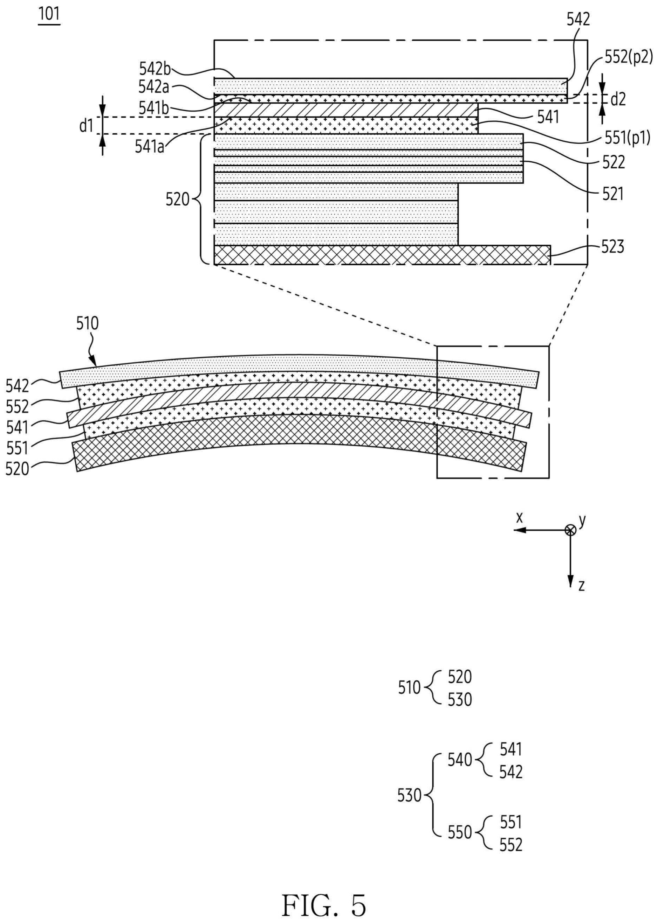

FIG. 5 is a partial cross-sectional view of an exemplary electronic device cut along line A-A' of FIG. 2A.

Referring to FIG. 5, an electronic device 101 may include a first housing (e.g., the first housing 210 of FIG. 2A), a second housing (e.g., the second housing 220 of FIG. 2A) movable with respect to the first housing 210, and a flexible display 510 at least partially deformable according to movement of the second housing 220. The flexible display 510 may include a plurality of layers 530 and a plurality of other layers 520 including a display panel 521.

According to an embodiment, the plurality of layers 530 may be disposed on the display panel 521. In the present document, when an element is referred to as being "on" another element, it should be understood that the element may be directly on the other element or that intervening elements may exist therebetween. For example, in the present document, "B disposed on A" may indicate "B disposed over A." For example, in the present document, "B disposed on A" may indicate "B faced away A." For example, "the plurality of layers 530 disposed on the display panel 521" may indicate "the plurality of layers 530 contacting the display panel 521." For example, "the plurality of layers 530 disposed on the display panel 521" may indicate "the plurality of layers 530 facing the display panel 521 and spaced apart from the display panel 521."

For example, the plurality of layers 530 may be disposed over the display panel 521. For example, the plurality of layers 530 may be disposed on an outer side of the electronic device 101, based on the display panel 521. For example, when the flexible display 510 is viewed from above (e.g., when viewed in a -z direction), the plurality of layers 530 may at least partially overlap the display panel 521. For example, the plurality of layers 530 may cover the display panel 521. For example, the plurality of layers 530 may be disposed on the plurality of other layers 520 including the display panel 521. For example, the plurality of layers 530 may be spaced apart from the display panel 521 in a direction (e.g., the -z direction) toward the outside of the electronic device 101. For example, the display panel 521 may be disposed on an inner side of the electronic device 101, based on the plurality of layers 530. For example, the display panel 521 may be spaced apart from the plurality of layers 530 in a direction (e.g., a +z direction) toward an internal space of the electronic device 101. For example, at least a portion of the plurality of layers 530 may form a surface of the flexible display 510 exposed to the outside of the electronic device 101.

For example, the plurality of other layers 520 including the display panel 521 may include at least one intervening layer 522 disposed between the plurality of layers 530 and the display panel 521. For example, at least a portion of the at least one intervening layer 522 may contact one layer (e.g., a first adhesive layer 551) facing the display panel 521 among the plurality of layers 530. For example, the at least one intervening layer 522 may include at least one adhesive layer to attach the plurality of layers 530 onto the plurality of other layers 520. For example, the at least one intervening layer 522 may include a polarizer, but is not limited thereto. For example, the plurality of other layers 520 including the display panel 521 may include a base layer 523. The base layer 523 may be a layer of the flexible display 510 facing the internal space of the electronic device 101. For example, the plurality of other layers 520 may include at least one layer between the display panel 521 and the base layer 523. The at least one layer between the display panel 521 and the base layer 523 may include at least one adhesive layer. The base layer 523 may be a metal plate, but is not limited thereto.

According to an embodiment, the plurality of layers 530 may include a plurality of windows 540 and a plurality of adhesive layers 550 disposed at least partially between the plurality of windows 540.

For example, when the flexible display 510 is viewed from above (e.g., when viewed in the-z direction), the plurality of windows 540 may at least partially overlap each other. For example, at least a portion (e.g., a second window 542) of the plurality of windows 540 may be exposed to the outside of the electronic device 101. For example, at least a portion of the plurality of windows 540 may include two or more layers according to their function. For example, the plurality of adhesive layers 550 may attach the plurality of windows 540 to each other such that the plurality of windows 540 do not separate from the plurality of layers 530, respectively. For example, at least a portion of the plurality of adhesive layers 550 may be respectively disposed between the plurality of windows 540. A remaining portion of the plurality of adhesive layers 550 may be disposed on (e.g., in the -z direction) the plurality of other layers 520 to attach the plurality of layers 530 onto the plurality of other layers 520 of the flexible display 510.

For example, the plurality of windows 540 may include a first window 541 and the second window 542 spaced apart from the first window 541. The plurality of adhesive layers 550 may include the first adhesive layer 551 and a second adhesive layer 552 spaced apart from the first adhesive layer 551. For example, the first adhesive layer 551 may contact the plurality of other layers 520. The first adhesive layer 551 may attach the first window 541 onto the plurality of other layers 520. The first adhesive layer 551 may be disposed between the plurality of other layers 520 and the first window 541. For example, the first window 541 may be attached onto the first adhesive layer 551. The first window 541 may be disposed between the first adhesive layer 551 and the second adhesive layer 552. For example, the second adhesive layer 552 may be attached onto the first window 541. The second adhesive layer 552 may attach the second window 542 onto the first window 541. The second adhesive layer 552 may be disposed between the first window 541 and the second window 542. For example, the second window 542 may be exposed to the outside of the flexible display 510. The second window 542 may be attached onto the second adhesive layer 552. However, it is not limited thereto.

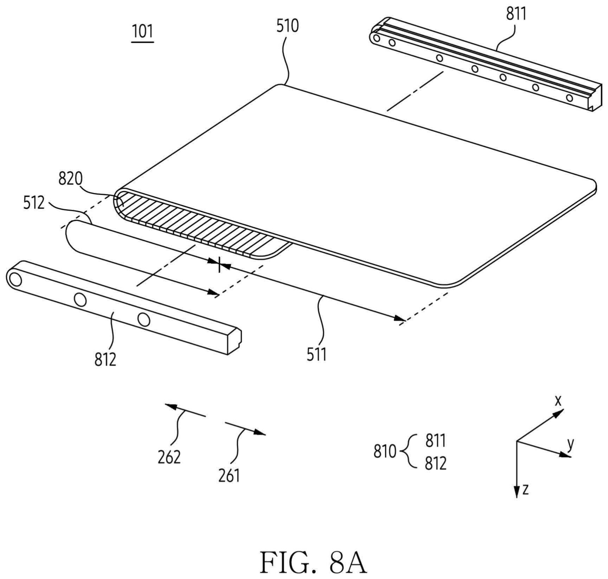

The flexible display 510 may include a region (e.g., the region 230b of FIG. 2C or a second region 512 of FIG. 8A) deformable along the second housing 220 moving with respect to the first housing 210. Since at least a portion of the flexible display 510 is deformed, the electronic device 101 may be required to reduce delamination of the plurality of layers 530 included in the flexible display 510 caused by deformation of the flexible display 510. According to the requirement, a disposition relationship between the plurality of windows 540 and the plurality of adhesive layers 550, which are included in the plurality of layers 530, may vary.

According to an embodiment, properties p1 of the first adhesive layer 551 among the plurality of adhesive layers 550 disposed on a first surface 541a of the first window 541 facing the display panel 521 among the plurality of windows 540 may be different from properties p2 of the second adhesive layer 552 among the plurality of adhesive layers 550 disposed on a second surface 542a of the second window 542 facing the display panel 521 among the plurality of windows 540, the second window 542 having a rigidity lower than a rigidity of the first window 541.

For example, a stiffness of the first window 541 may be greater than a stiffness of the second window 542. For example, a bending rigidity of the first window 541 may be greater than a bending rigidity of the second window 542. For example, a shear rigidity of the first window 541 may be greater than a shear rigidity of the second window 542. For example, a torsion rigidity of the first window 541 may be greater than a torsion rigidity of the second window 542. For example, a modulus of the first window 541 may be greater than a modulus of the second window 542. For example, it may be greater than a moment of inertia of area of the first window 541. For example, a bending moment of the first window 541 may be greater than a bending moment of the second window 542.

For example, to reinforce rigidity against deformation of the flexible display 510, the bending rigidity of the first window 541 may be greater than a bending rigidity of each of remaining windows excluding the first window 541 among the plurality of windows 540. Since the rigidity of the first window 541 is relatively greater than a rigidity of each of the remaining windows excluding the first window 541, adhesive layers contacting the first window 541 may be required to have a structure for reducing delamination according to deformation of the flexible display 510.

For example, an adhesion of the first adhesive layer 551, which is disposed on the first surface 541a of the first window 541 facing the display panel 521, the first window 541 having the greatest rigidity among the plurality of windows 540, may be greater than an adhesion of the second adhesive layer 552 disposed on the second surface 542a of the second window 542 facing the display panel 521, the second window 542 having a rigidity lower than the rigidity of the first window 541. For example, cohesion of the first adhesive layer 551, which is disposed on the first surface 541a of the first window 541 having the greatest rigidity among the plurality of windows 540, may be greater than cohesion of the second adhesive layer 552 disposed on the second surface 542a of the second window 542 having a rigidity lower than the rigidity of the first window 541. For example, peel strength between the first adhesive layer 551 contacting the first surface 541a of the first window 541 having the greatest rigidity among the plurality of windows 540, and the first surface 541a may be greater than peel strength between the second adhesive layer 552 contacting the second surface 542a of the second window 542 having a rigidity lower than the rigidity of the first window 541, and the second surface 542a. For example, a creep resistance of the first adhesive layer 551 disposed on the first surface 541a of the first window 541 having the greatest rigidity among the plurality of windows 540, may be greater than a creep resistance of the second adhesive layer 552 disposed on the second surface 542a of the second window 542 having a rigidity lower than the rigidity of the first window 541. Since the properties p1 of the first adhesive layer 551 are different from the properties p2 of the second adhesive layer 552, the flexible display 510 may reduce delamination of layers around the first window 541, which has a relatively high rigidity, caused by deformation of the flexible display 510. The properties of each adhesive layer (e.g., the first adhesive layer 551 and the second adhesive layer 552) being different from one another may include not only the cohesion, peel strength, and creep resistance mentioned above but also thickness, and therefore, should not be considered limited to the properties mentioned above.

According to an embodiment, a thickness d1 of the first adhesive layer 551 may be greater than a thickness d2 of the second adhesive layer 552. For example, the thickness d1 of the first adhesive layer 551 disposed on the first surface 541a of the first window 541 facing the inside of the electronic device 101, the first window 541 having the greatest rigidity among the plurality of windows 540, may be greater than a thickness of each of remaining adhesive layers excluding the first adhesive layer 551 among the plurality of adhesive layers 550. For example, among the plurality of layers 530, a distance corresponding to the thickness d1 of the first adhesive layer 551 between the layers (e.g., the first window 541 and the at least one intervening layer 522) contacting the first adhesive layer 551, which is formed by lamination, may be greater than a distance corresponding to the thickness d2 of the second adhesive layer 552 between the layers (e.g., the first window 541 and the second window 542) contacting the second adhesive layer 552, which is formed by lamination. For example, the thickness d1 of the first adhesive layer 551, disposed on the first surface 541a of the first window 541 facing the display panel 521, the first window 541 having the greatest rigidity among the plurality of windows 540, may be the thickest among the plurality of adhesive layers 550. For example, a distance corresponding to the thickness d1 of the first adhesive layer 551 between the first surface 541a of the first window 541 facing the display panel 521, the first window 541 having the greatest rigidity among the plurality of windows 540, and the plurality of other layers 520 may be greater than the thickness d2 of the second adhesive layer 552 disposed on the second surface 542a of the second window 542 facing the display panel 521. Since the thickness d1 of the first adhesive layer 551 is greater than the thickness d2 of the second adhesive layer 552, the flexible display 510 may reduce delamination of the layers around the first window 541, which has a relatively high rigidity, due to deformation of the flexible display 510.

According to the above-described embodiment, the electronic device 101 may provide various user experiences to a user by including the flexible display 510 that is at least partially deformable along the second housing 220 moving with respect to the first housing 210. The flexible display 510 may reduce delamination of the layers around the first window 541 due to deformation of the flexible display 510, as the properties p1 of the first adhesive layer 551 disposed on the first surface 541a of the first window 541 facing the display panel 521, the first window 541 having a relatively high rigidity, are different from the properties p2 of the second adhesive layer 552 disposed on the second surface 542a of the second window 542 facing the display panel 521, the second window 542 having a rigidity lower than the rigidity of the first window 541.

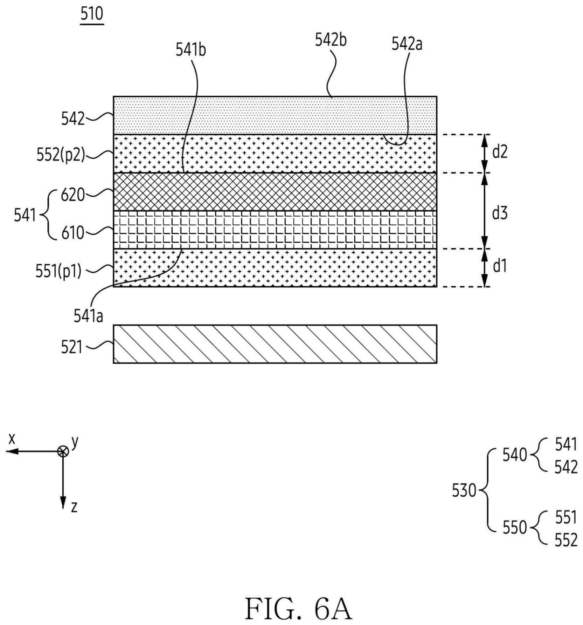

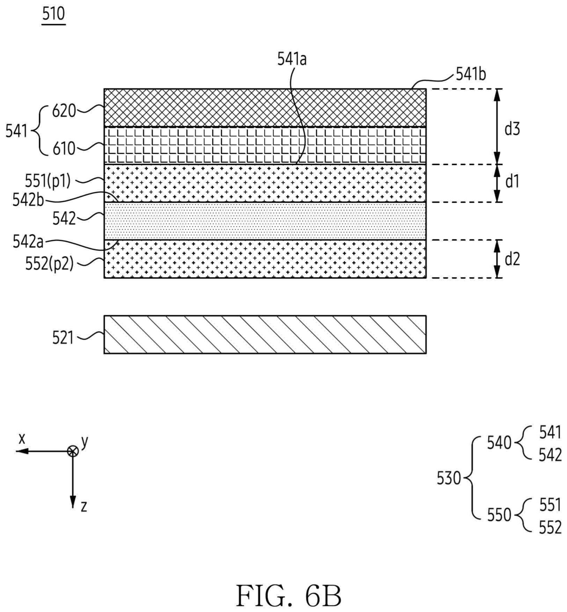

FIGS. 6A and 6B are partial cross-sectional views of a flexible display of an exemplary electronic device.

Referring to FIGS. 6A and 6B, an electronic device 101 may include a first housing (e.g., the first housing 210 of FIG. 2A), a second housing (e.g., the second housing 220 of FIG. 2A) movable with respect to the first housing 210, and a flexible display 510 at least partially deformable according to movement of the second housing 220. The flexible display 510 may include a display panel 521 and a plurality of layers 530 disposed on the display panel 521. The plurality of layers 530 may include a plurality of windows 540 and a plurality of adhesive layers 550 respectively disposed between the plurality of windows 540. Properties p1 of a first adhesive layer 551 among the plurality of adhesive layers 550 disposed on a first surface 541a of a first window 541 facing the display panel 521 among the plurality of windows 540 may be different from properties p2 of a second adhesive layer 552 among the plurality of adhesive layers 550 disposed on a second surface 542a of a second window 542 facing the display panel 521 among the plurality of windows 540, the second window 542 having a rigidity lower than a rigidity of the first window 541. According to an embodiment, a thickness d1 of the first adhesive layer 551 may be greater than a thickness d2 of the second adhesive layer 552. According to an embodiment, a bending rigidity of the first window 541 may be greater than a bending rigidity of each of remaining windows excluding the first window 541 among the plurality of windows 540.

Hereinafter, redundant description of the configuration described in FIG. 5 is omitted.

According to an embodiment, the plurality of windows 540 may include at least one of acryl, elastomer, glass, polyimide (PI), polyethylene terephthalate (PET), polyethylene naphthalate (PEN), thermoplastic elastomer (TPE), thermoplastic polyurethane (TPU), and optically clear resin (OCR). However, it is not limited thereto. Each of the plurality of windows 540 may reinforce a rigidity of the flexible display 510 with respect to deformation of the flexible display 510 by including at least one of acryl, elastomer, glass, polyimide, polyethylene, TPE, TPU, OCR, or a combination thereof.

For example, a window having a modulus within a range of 1Gpa or more and 7Gpa or less may be a window including a film that includes at least one of polyethylene terephthalate or polyethylene naphthalate. For example, a window having a modulus of 60Gpa or more may be a window including glass. However, it is not limited thereto.

According to an embodiment, the first window 541 may include a first layer 610 having a modulus within a range of 1Gpa or more and 7Gpa or less and may have a thickness d3 within a range of 100µm or more and 1 mm or less. The thickness d1 of the first adhesive layer 551 may be positioned within a range of 50% or more and less than 100% of the thickness d3 of the first window 541. For example, the first layer 610 may be a film layer including at least one of acryl, elastomer, polyimide, polyethylene terephthalate, polyethylene naphthalate, TPE, TPU, and OCR. For example, the first window 541 may have a modulus within a range of 1Gpa or more and 7Gpa or less by including the first layer 610. For example, the first window 541 may be a window having the greatest rigidity among the plurality of windows 540 by including the first layer 610. The thickness d3 of the first window 541 may be positioned within a range of 100µm or more and 1 mm or less. The thickness d1 of the first adhesive layer 551 disposed on the first surface 541a of the first window 541 facing the display panel 521 may have a thickness of half or more of the thickness d3 of the first window 541. A creep resistance of the first adhesive layer 551 at a temperature of 60 degrees may be positioned within a range of 20% or more of a creep resistance of the first window 541. As the first window 541 includes the first layer 610 having a modulus within a range of 1Gpa or more and 7Gpa or less, and the thickness d1 of the first adhesive layer 551 is positioned within a range of 50% or more and less than 100% of the thickness d3 of the first window 541, the flexible display 510 may reduce delamination of layers around the first window 541 due to deformation of the flexible display 510.

Referring to FIG. 6A, the first window 541 may be positioned in a direction (e.g., a +z direction) toward the inside of the electronic device 101, based on the second window 542. The second adhesive layer 552 may be disposed between a third surface 541b opposite to the first surface 541a of the first window 541 facing the display panel 521, and the second surface 542a of the second window 542 facing the display panel 521. The thickness d2 of the second adhesive layer 552 may be positioned within a range of 1% or more and 100% or less of the thickness d1 of the first adhesive layer 551. For example, the thickness d2 of the second adhesive layer 552 may be positioned within a range of 30% or more and 100% or less of the thickness d1 of the first adhesive layer 551. For example, when the first window 541 includes the first layer 610 having a modulus within a range of 1Gpa or more and 7Gpa or less and has a thickness d3 within a range of 100µm or more and 1 mm or less, the thickness d1 of the first adhesive layer 551 on the first surface 541a of the first window 541 may be positioned within a range of 50% or more and less than 100% of the thickness d3 of the first window 541 to reduce delamination of the layers around the first window 541. In this case, a second layer 620 of the first window 541 may be omitted. The second adhesive layer 552 disposed between the third surface 541b opposite to the first surface 541a of the first window 541, and the second window 542 having a rigidity lower than the rigidity of the first window 541 may have a thickness d2 within a range of 70% or less of the thickness d1 of the first adhesive layer 551 to reduce delamination of the second window 542. An adhesion of the second adhesive layer 552 may be positioned within a range of 1% or more and 95% or less of an adhesion of the first adhesive layer 551.

Referring to FIG. 6B, unlike FIG. 6A, the first window 541 may be positioned in a direction (e.g., a -z direction) toward the outside of the electronic device 101, based on the second window 542. The second adhesive layer 552 may be disposed on the second surface 542a of the second window 542 facing the display panel 521. The first adhesive layer 551 may be disposed between the first surface 541a of the first window 541 facing the display panel 521, and a fourth surface 542b opposite to the second surface 542a of the second window 542 facing the display panel 521. The thickness d2 of the second adhesive layer 552 may be positioned within a range of 1% or more and 100% or less of the thickness d1 of the first adhesive layer 551. For example, the thickness d2 of the second adhesive layer 552 may be positioned within a range of 30% or more and 100% or less of the thickness d1 of the first adhesive layer 551. For example, when the first window 541 includes the first layer 610 having a modulus within a range of 1Gpa or more and 7Gpa or less and has a thickness d3 within a range of 100µm or more and 1 mm or less, the thickness d1 of the first adhesive layer 551 between the first surface 541a and the fourth surface 542b may be positioned within a range of 50% or more and less than 100% of the thickness d3 of the first window 541 to reduce delamination of the layers around the first window 541. In this case, the second layer 620 of the first window 541 may be omitted. The second adhesive layer 552 disposed on the second surface 542a of the second window 542 facing the display panel 521, the second window 542 having a rigidity lower than the rigidity of the first window 541, may have a thickness d2 within a range of 70% or less of the thickness d1 of the first adhesive layer 551 to reduce delamination of the second window 542. An adhesion of the second adhesive layer 552 may be positioned within a range of 1% or more and 95% or less of an adhesion of the first adhesive layer 551.

According to an embodiment, the first window 541 may include the second layer 620 having a modulus within a range of 60Gpa or more and 1000Gpa or less and may have a thickness d3 within a range of 10µm or more and 1 mm or less. For example, a modulus of the second layer 620 included in the first window 541 may be within a range of 60Gpa or more and 100Gpa or less, and the thickness d3 of the first window 541 may be positioned within a range of 10µm or more and 200µm or less. In this case, the first layer 610 of the first window 541 may be omitted. The thickness d1 of the first adhesive layer 551 may be positioned within a range of 70% or more and 350% or less of the thickness d3 of the first window 541. For example, the second layer 620 may be a glass layer. For example, the first window 541 may have a modulus of 60Gpa or more by including the second layer 620. For example, the first window 541 may be a window having the greatest rigidity among the plurality of windows 540 by including the second layer 620. The thickness d3 of the first window 541 may be positioned within a range of 10µm or more and 1 mm or less. For example, the thickness d3 of the first window 541 may be positioned within a range of 10µm or more and 200µm or less. The thickness d1 of the first adhesive layer 551 disposed on the first surface 541a of the first window 541 facing the display panel 521 may have a thickness of 70% or more of the thickness d3 of the first window 541. The creep resistance of the first adhesive layer 551 at a temperature of 60 degrees may be positioned within a range of 35% or more of the creep resistance of the first window 541. As the first window 541 includes the second layer 620 having a modulus within a range of 60Gpa or more and 100Gpa or less, and the thickness d1 of the first adhesive layer 551 is positioned within a range of 70% or more and 350% or less of the thickness d3 of the first window 541, the flexible display 510 may reduce delamination of the layers around the first window 541 due to deformation of the flexible display 510.

Referring to FIG. 6A, the first window 541 may be positioned in a direction (e.g., the +z direction) toward the inside of the electronic device 101, based on the second window 542. The second adhesive layer 552 may be disposed between the third surface 541b opposite to the first surface 541a of the first window 541 facing the display panel 521, and the second surface 542a of the second window 542 facing the display panel 521. The thickness d2 of the second adhesive layer 552 may be positioned within a range of 30% or more and 100% or less of the thickness d1 of the first adhesive layer 551. For example, when the first window 541 includes the second layer 620 having a modulus within a range of 60Gpa or more and 100Gpa or less and has a thickness d3 within a range of 10µm or more and 200µm or less, the thickness d1 of the first adhesive layer 551 on the first surface 541a of the first window 541 may be positioned within a range of 70% or more and 350% or less of the thickness d3 of the first window 541 to reduce delamination of the layers around the first window 541. In this case, the first layer 610 of the first window 541 may be omitted. The second adhesive layer 552 disposed between the third surface 541b opposite to the first surface 541a of the first window 541, and the second window 542 having a rigidity lower than the rigidity of the first window 541 may have a thickness d2 within a range of 70% or less of the thickness d1 of the first adhesive layer 551 to reduce delamination of the second window 542. The adhesion of the second adhesive layer 552 may be positioned within a range of 1% or more and 95% or less of the adhesion of the first adhesive layer 551.

Referring to FIG. 6B, unlike FIG. 6A, the first window 541 may be positioned in a direction (e.g., the -z direction) toward the outside of the electronic device 101, based on the second window 542. The second adhesive layer 552 may be disposed on the second surface 542a of the second window 542 facing the display panel 521. The first adhesive layer 551 may be disposed between the first surface 541a of the first window 541 facing the display panel 521, and the fourth surface 542b opposite to the second surface 542a of the second window 542 facing the display panel 521. The thickness d2 of the second adhesive layer 552 may be positioned within a range of 30% or more and 100% or less of the thickness d1 of the first adhesive layer 551. For example, when the first window 541 includes the second layer 620 having a modulus within a range of 60Gpa or more and 100Gpa or less and has a thickness d3 within a range of 10µm or more and 200µm or less, the thickness d1 of the first adhesive layer 551 between the first surface 541a and the fourth surface 542b may be positioned within a range of 70% or more and 350% or less of the thickness d3 of the first window 541 to reduce delamination of the layers around the first window 541. In this case, the first layer 610 of the first window 541 may be omitted. The second adhesive layer 552 disposed on the second surface 542a of the second window 542 facing the display panel 521, the second window 542 having a rigidity lower than the rigidity of the first window 541, may have a thickness d2 within a range of 70% or less of the thickness d1 of the first adhesive layer 551 to reduce delamination of the second window 542. The adhesion of the second adhesive layer 552 may be positioned within a range of 1% or more and 95% or less of the adhesion of the first adhesive layer 551.

According to an embodiment, the second adhesive layer 552 may be disposed between the third surface 541b opposite to the first surface 541a of the first window 541 facing the display panel 521, and the second surface 542a of the second window 542 facing the display panel 521. The adhesion of the second adhesive layer 552 may be positioned within a range of 1% or more and 95% or less of the adhesion of the first adhesive layer 551.

According to the above-described embodiment, the flexible display 510 may reduce delamination of the layers around the first window 541 due to deformation of the flexible display 510, as the properties p1 of the first adhesive layer 551 disposed on the first surface 541a of the first window 541 facing the display panel 521, the first window 541 having a relatively high rigidity, are different from the properties p2 of the second adhesive layer 552 disposed on the second surface 542a of the second window 542 facing the display panel 521, the second window 542 having a rigidity lower than the rigidity of the first window 541.

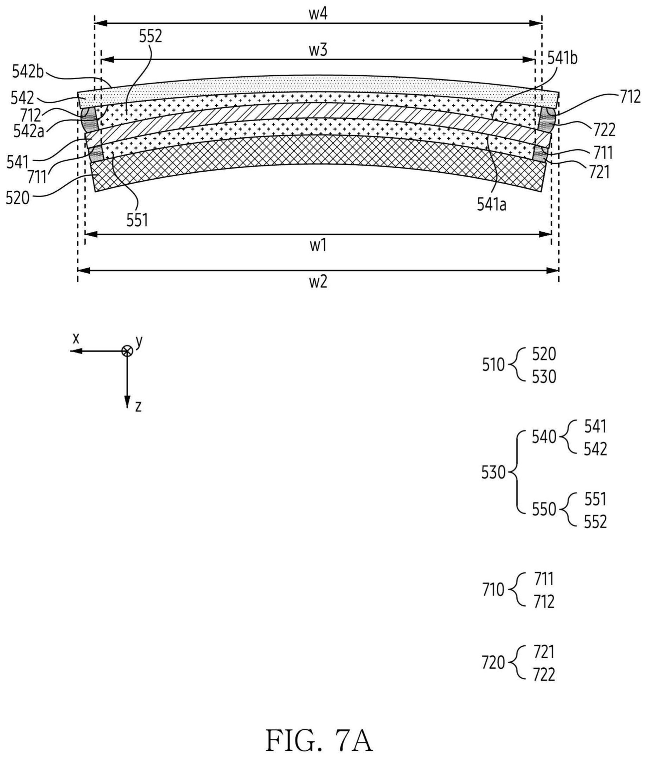

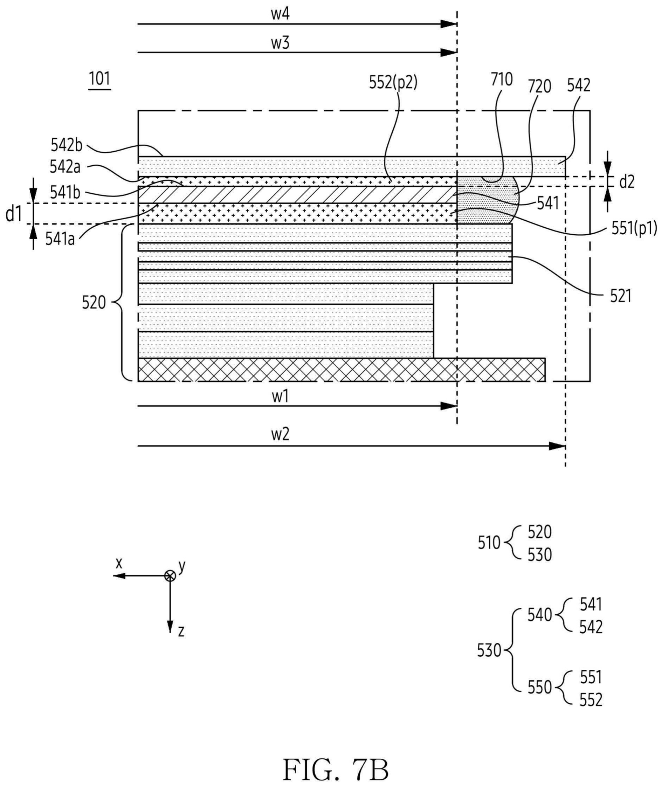

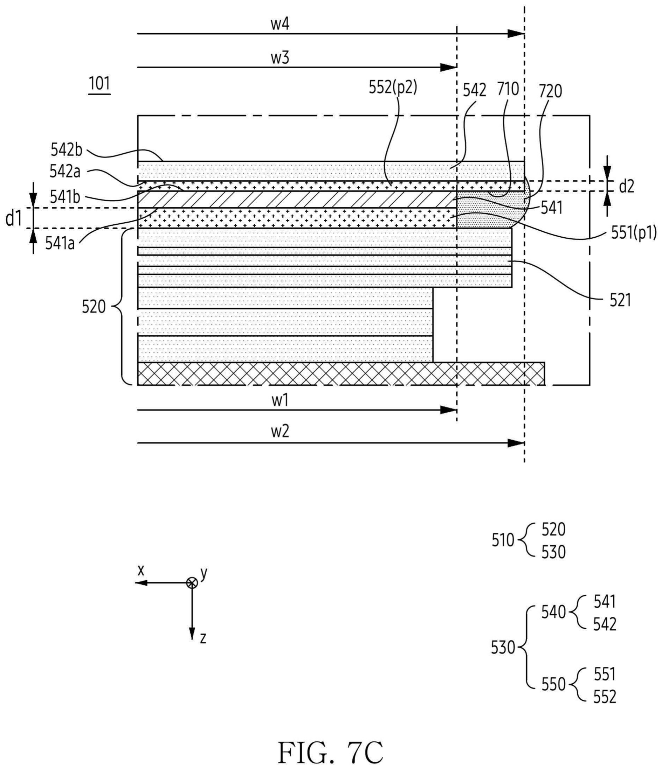

FIG. 7A is a partial cross-sectional view of an exemplary electronic device. FIGS. 7B and 7C illustrate a portion of a flexible display of the exemplary electronic device.

Referring to FIGS. 7A, 7B, and 7C, an electronic device 101 may include a first housing (e.g., the first housing 210 of FIG. 2A), a second housing (e.g., the second housing 220 of FIG. 2A) movable with respect to the first housing 210, and a flexible display 510 at least partially deformable according to movement of the second housing 220. The flexible display 510 may include a display panel 521 and a plurality of layers 530 disposed on the display panel 521. The plurality of layers 530 may include a plurality of windows 540 and a plurality of adhesive layers 550 respectively disposed between the plurality of windows 540. Properties p1 of a first adhesive layer 551 among the plurality of adhesive layers 550 disposed on a first surface 541a of a first window 541 facing the display panel 521 among the plurality of windows 540 may be different from properties p2 of a second adhesive layer 552 among the plurality of adhesive layers 550 disposed on a second surface 542a of a second window 542 facing the display panel 521 among the plurality of windows 540, the second window 542 having a rigidity lower than a rigidity of the first window 541. According to an embodiment, a thickness d1 of the first adhesive layer 551 may be greater than a thickness d2 of the second adhesive layer 552. According to an embodiment, a bending rigidity of the first window 541 may be greater than a bending rigidity of each of remaining windows excluding the first window 541 among the plurality of windows 540.

According to an embodiment, a width w2 of the second window 542 may be greater than or equal to a width of each of remaining layers excluding the second window 542 among the plurality of layers 530. The plurality of layers 530 may further include at least one step portion 710 disposed under the second window 542 and formed by at least a portion of the plurality of windows 540 and at least a portion of the plurality of adhesive layers 550. For example, the second window 542 among the plurality of windows 540 may be a window forming a surface of the flexible display 510 exposed to the outside of the electronic device 101. For example, the width w2 of the second window 542 may be greater than a width w1 of the first window 541, a width w3 of the first adhesive layer 551, and a width w4 of the second adhesive layer 552. Due to the difference between the width of the second window 542 and the width of each of the remaining layers excluding the second window 542 among the plurality of layers 530, the flexible display 510 may include the at least one step portion 710.

For example, since the first window 541 has the width w1 greater than the width w3 of the first adhesive layer 551 disposed on the first surface 541a of the first window 541, the plurality of layers 530 may include a first step portion 711 between the first window 541 and the first adhesive layer 551. For example, since the second window 542 has the width w2 greater than the width w4 of the second adhesive layer 552 disposed on the second surface 542a of the second window 542, the plurality of layers 530 may include a second step portion 712 between the second window 542 and the second adhesive layer 552. However, it is not limited thereto. The flexible display 510 may reduce leakage of the plurality of adhesive layers 550 from the plurality of layers 530 due to the deformable flexible display, as the plurality of layers 530 includes the at least one step portion 710 formed by at least a portion of the plurality of windows 540 and at least a portion of the plurality of adhesive layers 550.

According to an embodiment, the second adhesive layer 552 may be disposed between a third surface 541b opposite to the first surface 541a of the first window 541 facing the display panel 521, and the second surface 542a of the second window 542 facing the display panel 521. The flexible display 510 may further include a coating member 720 contacting at least a portion of the first adhesive layer 551 and the second adhesive layer 552 for reducing leakage of adhesive material from the flexible display 510. For example, the coating member 720 may seal the plurality of adhesive layers 550 by contacting the plurality of adhesive layers 550 among the plurality of layers 530, respectively. For example, the coating member 720 may contact the plurality of adhesive layers 550, respectively, by being positioned in a groove structure formed by the at least one step portion 710. For example, the coating member 720 may include a first coating member 721 contacting the first step portion 711 and the first adhesive layer 551, and a second coating member 722 contacting the second step portion 712 and the second adhesive layer 552. However, it is not limited thereto. The flexible display 510 may reduce leakage of the plurality of adhesive layers 550 from the plurality of layers 530 due to the deformable flexible display by including the coating member 720.

Referring to FIG. 7B, the plurality of layers 530 may include at least one step portion 710 formed between the second window 542 exposed to the outside of the electronic device 101 and remaining layers (e.g., the first window 541, the first adhesive layer 551, and the second adhesive layer 552) excluding the second window 542 among the plurality of layers 530. The coating member 720 may be positioned in a groove structure formed by the at least one step portion 710. For example, the coating member 720 may be disposed between the second surface 542a of the second window 542 facing the display panel 521 and a plurality of other layers 520 including the display panel 521. For example, the width w1 of the first window 541 may be smaller than the width w2 of the second window 542. The width w3 of the first adhesive layer 551 and the width w4 of the second adhesive layer 552 may be substantially the same as the width w1 of the first window 541, respectively. Since the width w3 of the first adhesive layer 551 and the width w4 of the second adhesive layer 552 are substantially the same as the width w1 of the first window 541, the coating member 720 disposed on the at least one step portion 710 may contact the first window 541, the first adhesive layer 551, and the second adhesive layer 552. The coating member 720 may seal the first window 541, and the first adhesive layer 551 and the second adhesive layer 552 laminated to the first window 541 by contacting the first window 541, the first adhesive layer 551, and the second adhesive layer 552. The coating member 720 may reduce separation of the first adhesive layer 551 and the second adhesive layer 552 from the plurality of layers 530 due to the deformable flexible display 510, by sealing the first adhesive layer 551 and the second adhesive layer 552.

Referring to FIG. 7C, unlike FIG. 7B, the plurality of layers 530 may include at least one step portion 710 formed between the second adhesive layer 552 attached to the second window 542 exposed to the outside of the electronic device 101, and remaining layers (e.g., the first window 541 and the first adhesive layer 551) among the plurality of layers 530 excluding the second window 542 and the second adhesive layer 552. A portion of the coating member 720 may be disposed in a groove structure formed by the at least one step portion 710. A remaining portion of the coating member 720 may contact the second adhesive layer 552 by protruding from the groove structure formed by the at least one step portion 710. The remaining portion of the coating member 720 may seal the second adhesive layer 552 by contacting the second adhesive layer 552. The portion of the coating member 720 may seal the first window 541 and the first adhesive layer 551 by contacting the first window 541 and the first adhesive layer 551. For example, the width w1 of the first window 541 may be smaller than the width of the second window w2. The width w2 of the second window 542 may be substantially the same as the width w4 of the second adhesive layer 552 attached to the second window 542. The width w1 of the first window 541 and the width w3 of the first adhesive layer 551 interposed between the plurality of layers 530 may be substantially the same. A portion of the coating member 720 may seal the first window 541 and the first adhesive layer 551 by being disposed on the at least one step portion 710 formed by the second adhesive layer 552, the first window 541, and the first adhesive layer 551. A remaining portion of the coating member 720 may seal the second adhesive layer 552 by contacting the second adhesive layer 552. The coating member 720 may reduce separation of the first adhesive layer 551 and the second adhesive layer 552 from the plurality of layers 530 due to the deformable flexible display 510, by sealing the first adhesive layer 551 and the second adhesive layer 552. However, it is not limited thereto.

According to an embodiment, a modulus of the coating member 720 may be greater than a modulus of each of the plurality of adhesive layers 550. The coating member 720 contacting the plurality of adhesive layers 550 may reduce leakage of the plurality of adhesive layers 550 from the plurality of layers 530 due to the deformable flexible display, by having a modulus greater than the modulus of each of the plurality of adhesive layers 550.

According to the above-described embodiment, the flexible display 510 may reduce leakage of the plurality of adhesive layers 550 from the plurality of layers 530 due to the deformable flexible display, by including the at least one step portion 710 and/or the coating member 720 contacting the plurality of adhesive layers 550.

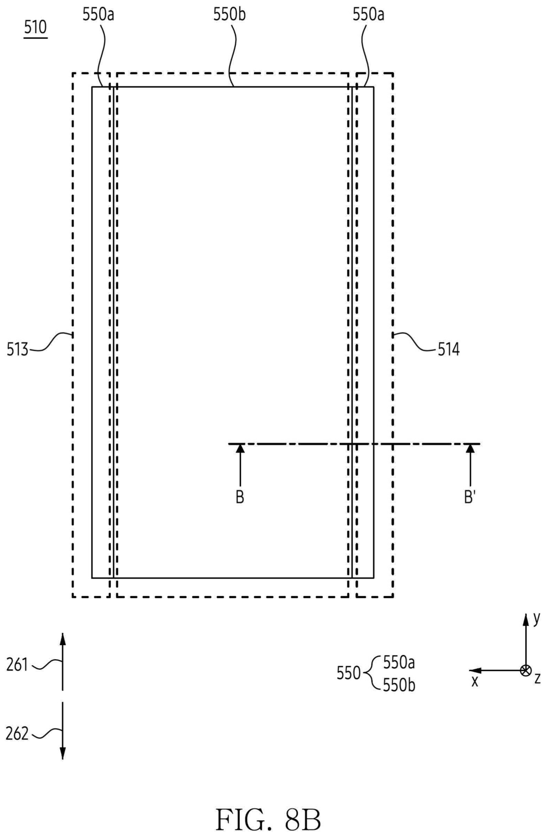

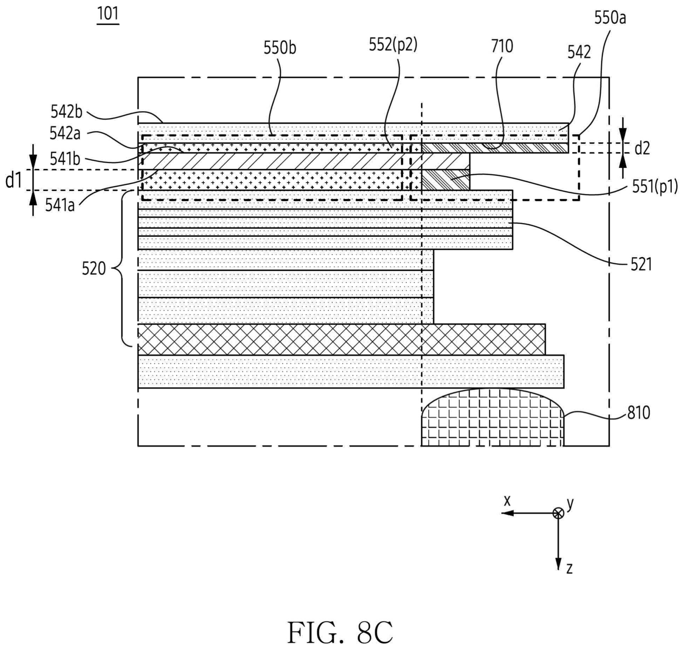

FIG. 8A is a partially exploded perspective view of an exemplary electronic device. FIG. 8B is a top plan view of a flexible display of the exemplary electronic device. FIG. 8C illustrates a portion of the exemplary electronic device.

Referring to FIGS. 8A, 8B, and 8C, an electronic device 101 may include a first housing (e.g., the first housing 210 of FIG. 2A), a second housing (e.g., the second housing 220 of FIG. 2A) movable with respect to the first housing 210, and a flexible display 510 at least partially deformable according to movement of the second housing 220. The flexible display 510 may include a display panel 521 and a plurality of layers 530 disposed on the display panel 521. The plurality of layers 530 may include a plurality of windows 540 and a plurality of adhesive layers 550 respectively disposed between the plurality of windows 540. Properties p1 of a first adhesive layer 551 among the plurality of adhesive layers 550 disposed on a first surface 541a of a first window 541 facing the display panel 521 among the plurality of windows 540 may be different from properties p2 of a second adhesive layer 552 among the plurality of adhesive layers 550 disposed on a second surface 542a of a second window 542 facing the display panel 521 among the plurality of windows 540, the second window 542 having a rigidity lower than a rigidity of the first window 541. According to an embodiment, a thickness d1 of the first adhesive layer 551 may be greater than a thickness d2 of the second adhesive layer 552. According to an embodiment, a bending rigidity of the first window 541 may be greater than a bending rigidity of each of remaining windows excluding the first window 541 among the plurality of windows 540.

According to an embodiment, the flexible display 510 may further include a first region 511 (e.g., the region 230a of FIG. 2A) disposed on the second housing 220, and a second region 512 (e.g., the region 230b of FIG. 2C) that is at least partially rolled into the first housing 210 or exposed to the outside of the first housing 210 as the second housing 220 moves with respect to the first housing 210. For example, referring to FIG. 2A to FIG. 4B together, the second housing 220 may slide and move with respect to the first housing 210 from a first state. By moving with respect to the first housing 210, the second housing 220 may be configured to change the electronic device 101 from the first state to a second state or from the second state to the first state.

According to an embodiment, the second housing 220 may be configured to be movable in a first direction 261 and a second direction 262 opposite to the first direction 261 with respect to the first housing 210. The first housing 210 may include at least one guide rail 810 supporting the flexible display 510 to guide deformation of the flexible display 510.

For example, referring to FIG. 2A to FIG. 4B together, the first region 511 may be exposed to the outside by being disposed on the second housing 220. In the first state, the second region 512 may be disposed in the first housing 210. While changing from the first state to the second state, since the second housing 220 moves in the first direction 261 with respect to the first housing 210, the first region 511 may move in the first direction 261 along the second housing 220. Since the second region 512 extends from the first region 511, the second region 512 may be exposed to the outside by moving along the first region 511.

For example, in the second state, the second region 512 may be exposed to the outside. While changing from the second state to the first state, since the second housing 220 moves in the second direction 262 opposite to the first direction 261 with respect to the first housing 210, the first region 511 may move in the second direction 262 along the second housing 220. Since the second region 512 extends from the first region 511, the second region 512 may be rolled into the first housing 210 by moving along the first region 511.

For example, although not illustrated, in an intermediate state between the first state and the second state, a portion of the second region 512 may be exposed to the outside. The remainder of the second region 512 may be disposed in the first housing 210. Since the second region 512 may be deformable to be rolled into the first housing or exposed to the outside of the electronic device 101, the second region 512 may be configured to provide multiple states.

The first state may be referred to as a slide-in state or a closed state in which the second region 512 is rolled into the first housing 210. The second state may be referred to as a slide-out state or an open state in which the second region 512 is exposed to the outside.

For example, the guide rail 810 (e.g., the rails 313a of FIG. 3A) of the electronic device 101 may guide movement of the second region 512 of the flexible display 510. The electronic device 101 may further include a plurality of support bars 820 attached to an inner surface of the second region 512 facing the inside of the electronic device 101. The plurality of support bars 820 may partially surround the guide rail 810. For example, the guide rail 810 may partially surround an internal space of the electronic device 101 by partially contacting the plurality of support bars 820. For example, the plurality of support bars 820 may be moved along the second region 512 moved according to driving of the electronic device 101. The guide rail 810 may be moved in the first direction 261 or in the second direction 262 opposite to the first direction along the plurality of support bars 820 moved by movement of the second region 512. According to an embodiment, the guide rail 810 and the plurality of support bars 820 may engage with each other. By including the guide rail 810 and the plurality of support bars 820 engaged with each other, the electronic device 101 may reduce separation of the second region 512 according to driving of the electronic device 101.

According to an embodiment, when the flexible display 510 is viewed from above (e.g., in a Z-axis direction), the plurality of adhesive layers 550 may further include a third region 550a configured to overlap the at least one guide rail 810, and a fourth region 550b contacting the third region 550a. A modulus of the third region 550a may be greater than a modulus of the fourth region 550b. According to an embodiment, the third region 550a may extend in a direction (e.g., a +y direction or a -y direction) parallel to the first direction 261 in the flexible display 510.

For example, the third region 550a may be a region supported by the at least one guide rail 810. For example, the third region 550a may be a region pressurized by the at least one guide rail 810. For example, the third region 550a may be a region disposed along both periphery parts of the flexible display 510 that extend in a direction parallel to the first direction 261 and the second direction 262 opposite to the first direction 261 and face each other, among the plurality of adhesive layers 550. For example, the fourth region 550b may be a region extending from the third region 550a. For example, the fourth region 550b may be a region disposed on an inner side based on both periphery parts of the flexible display 510 that extend in a direction parallel to the first direction 261 and the second direction 262 opposite to the first direction 261 and face each other.

For example, the at least one guide rail 810 may include a first guide rail 811 and a second guide rail 812 facing the first guide rail 811. The flexible display 510 may further include a first side region 513 configured to overlap the first guide rail 811, and a second side region 514 configured to overlap the second guide rail 812, according to movement of the second housing 220 with respect to the first housing 210 in the first direction 261 and the second direction 262 opposite to the first direction 261. The third region 550a may be a portion of the plurality of layers 530 included in the first side region 513 and the fourth side region 514. The fourth region 550b may be a remaining portion of the plurality of layers 530 extending from the third side region 513 to the fourth side region 514.

For example, a rigidity of the first adhesive layer 551 included in the third region 550a may be greater than a rigidity of the first adhesive layer 551 included in the fourth region 550b. For example, a rigidity of the second adhesive layer 552 included in the third region 550a may be greater than a rigidity of the second adhesive layer 552 included in the fourth region 550b. For example, a hardness of the first adhesive layer 551 included in the third region 550a may be greater than a hardness of the first adhesive layer 551 included in the fourth region 550b. For example, a hardness of the second adhesive layer 552 included in the third region 550a may be greater than a hardness of the second adhesive layer 552 included in the fourth region 550b. For example, an adhesion of the first adhesive layer 551 included in the third region 550a may be greater than an adhesion of the first adhesive layer 551 included in the fourth region 550b. For example, an adhesion of the second adhesive layer 552 included in the third region 550a may be greater than an adhesion of the second adhesive layer 552 included in the fourth region 550b. For example, a creep resistance of the first adhesive layer 551 included in the third region 550a may be greater than a creep resistance of the first adhesive layer 551 included in the fourth region 550b. For example, a creep resistance of the second adhesive layer 552 included in the third region 550a may be greater than a creep resistance of the second adhesive layer 552 included in the fourth region 550b. For example, a modulus of the first adhesive layer 551 included in the third region 550a may be greater than a modulus of the first adhesive layer 551 included in the fourth region 550. For example, a modulus of the second adhesive layer 552 included in the third region 550a may be greater than a modulus of the second adhesive layer 552 included in the fourth region 550. For example, adhesive material included in the third region 550a may be configured with substantially the same material as adhesive material included in the fourth region 550b. A bonding density among components included in the adhesive material included in the third region 550a may be greater than a bonding density among components included in the adhesive material included in the fourth region 550b. Since a modulus of the third region 550a is greater than a modulus of the fourth region 550b, the plurality of adhesive layers 550 may reduce leakage of adhesive material from a periphery of the flexible display 510 and reduce delamination of the plurality of layers 530 of the flexible display 510.

According to the above-described embodiment, the flexible display 510 may reduce leakage of adhesive material from a periphery of the flexible display 510 and reduce delamination of the plurality of layers 530 of the flexible display 510, by including the plurality of adhesive layers 550 including the third region 550a having a relatively high modulus.

According to the above-described embodiment, an electronic device (e.g., the electronic device 101 of FIG. 1) may include a first housing (e.g., the first housing 210 of FIG. 2A), a second housing (e.g., the second housing 220 of FIG. 2A) movable with respect to the first housing, and a flexible display (e.g., the display 230 of FIG. 2A or the flexible display 510 of FIG. 5) at least partially deformable according to movement of the second housing and including a display panel (e.g., the display panel 521 of FIG. 5) and a plurality of layers (e.g., the plurality of layers 530 of FIG. 5) disposed on the display panel. The plurality of layers may include a plurality of windows (e.g., the plurality of windows 540 of FIG. 5) including a first window (e.g., the first window 541 of FIG. 5) including a first surface (e.g., the first surface 541a of FIG. 5) facing the display panel, and a second window (e.g., the second window 542 of FIG. 5) having a rigidity lower than a rigidity of the first window and including a second surface (e.g., the second surface 542a of FIG. 5) facing the display panel. The plurality of layers may include a plurality of adhesive layers (e.g., the plurality of adhesive layers 550 of FIG. 5) at least partially disposed between the plurality of windows and including a first adhesive layer (e.g., the first adhesive layer 551 of FIG. 5) and a second adhesive layer (e.g., the second adhesive layer 552 of FIG. 5). Properties (e.g., the p1 of FIG. 5) of the first adhesive layer disposed on the first surface may be different from properties (e.g., the p2 of FIG. 5) of the second adhesive layer disposed on the second surface. According to the above-mentioned embodiment, the electronic device may provide various user experiences to a user by including the flexible display that is at least partially deformable. The flexible display may reduce delamination of layers around the first window due to deformation of the flexible display, as the properties of the first adhesive layer disposed on the first surface of the first window, which has a relatively high rigidity, are different from the properties of the second adhesive layer disposed on the second surface of the second window, which has a rigidity lower than the rigidity of the first window. The above-mentioned embodiment may have various effects including the effect mentioned above.

According to an embodiment, a thickness (e.g., the d1 of FIG. 5) of the first adhesive layer, which is one of the properties of the first adhesive layer, may be greater than a thickness (e.g., the d2 of FIG. 5) of the second adhesive layer, which is one of the properties of the second adhesive layer. According to the above-mentioned embodiment, the flexible display may reduce delamination of the layers around the first window due to deformation of the flexible display, as the properties of the first adhesive layer disposed on the first surface of the first window, which has a relatively high rigidity, are different from the properties of the second adhesive layer disposed on the second surface of the second window, which has a rigidity lower than the rigidity of the first window. The above-mentioned embodiment may have various effects including the effect mentioned above.

According to an embodiment, the first window may include a first layer (e.g., the first layer 610 of FIG. 6A) having a modulus within a range of 1Gpa or more and 7Gpa or less, and may have a thickness (e.g., the d3 of FIG. 6A) within a range of 100µm or more and 1mm or less. The thickness of the first adhesive layer may be positioned within a range of 50% or more and less than 100% of the thickness of the first window. According to the above-mentioned embodiment, the flexible display may reduce delamination of the layers around the first window due to deformation of the flexible display, as the properties of the first adhesive layer disposed on the first surface of the first window, which has a relatively high rigidity, are different from the properties of the second adhesive layer disposed on the second surface of the second window, which has a rigidity lower than the rigidity of the first window. The above-mentioned embodiment may have various effects including the effect mentioned above.

According to an embodiment, the second adhesive layer may be disposed between a third surface (e.g., the third surface 541b of FIG. 5) opposite to the first surface of the first window facing the display panel, and the second surface of the second window facing the display panel. The thickness of the second adhesive layer may be positioned within a range of 30% or more and 100% or less of the thickness of the first adhesive layer. According to the above-mentioned embodiment, the flexible display may reduce delamination of the layers around the first window due to deformation of the flexible display, as the properties of the first adhesive layer disposed on the first surface of the first window, which has a relatively high rigidity, are different from the properties of the second adhesive layer disposed on the second surface of the second window, which has a rigidity lower than the rigidity of the first window. The above-mentioned embodiment may have various effects including the effect mentioned above.

According to an embodiment, the first window may include a second layer (e.g., the second layer 620 of FIG. 6A) having a modulus within a range of 60Gpa or more and 100Gpa or less, and may have a thickness within a range of 10µm or more and 200µm or less. The thickness of the first adhesive layer may be positioned within a range of 70% or more and 350% or less of the thickness of the first window. According to the above-mentioned embodiment, the flexible display may reduce delamination of the layers around the first window due to deformation of the flexible display, as the properties of the first adhesive layer disposed on the first surface of the first window, which has a relatively high rigidity, are different from the properties of the second adhesive layer disposed on the second surface of the second window, which has a rigidity lower than the rigidity of the first window. The above-mentioned embodiment may have various effects including the effect mentioned above.

According to an embodiment, the second adhesive layer may be disposed between a third surface opposite to the first surface of the first window facing the display panel, and the second surface of the second window facing the display panel. An adhesion of the second adhesive layer may be positioned within a range of 1% or more and 95% or less of an adhesion of the first adhesive layer. According to the above-mentioned embodiment, the flexible display may reduce delamination of the layers around the first window due to deformation of the flexible display, as the properties of the first adhesive layer disposed on the first surface of the first window, which has a relatively high rigidity, are different from the properties of the second adhesive layer disposed on the second surface of the second window, which has a rigidity lower than the rigidity of the first window. The above-mentioned embodiment may have various effects including the effect mentioned above.

According to an embodiment, the plurality of windows may include at least one of acryl, elastomer, glass, polyimide (PI), polyethylene terephthalate (PET), polyethylene naphthalate (PEN), thermoplastic elastomer (TPE), thermoplastic polyurethane (TPU), and optically clear resin (OCR). According to the above-mentioned embodiment, the plurality of windows may be configured to reinforce a rigidity of the flexible display with respect to deformation of the flexible display. The above-mentioned embodiment may have various effects including the effect mentioned above.

According to an embodiment, a width (e.g., the w2 of FIG. 7A) of the second window may be greater than or equal to a width of each of remaining layers excluding the second window among the plurality of layers. The plurality of layers may further include at least one step portion (e.g., the at least one step portion 710 of FIG. 7A) disposed under the second window and formed by at least a portion of the plurality of windows and at least a portion of the plurality of adhesive layers. According to the above-mentioned embodiment, the plurality of layers may reduce leakage of the plurality of adhesive layers from the plurality of layers due to deformation of the flexible display by including the at least one step portion. The above-mentioned embodiment may have various effects including the effect mentioned above.

According to an embodiment, the second adhesive layer may be disposed between a third surface opposite to the first surface of the first window facing the display panel, and the second surface of the second window facing the display panel. The flexible display may further include a coating member (e.g., the coating member 720 of FIG. 7A) contacting at least a portion of the first adhesive layer and the second adhesive layer for reducing leakage of adhesive material from the flexible display. According to the above-mentioned embodiment, the flexible display may reduce leakage of the plurality of adhesive layers from the plurality of layers due to deformation of the flexible display by including the coating member. The above-mentioned embodiment may have various effects including the effect mentioned above.

According to an embodiment, a modulus of the coating member may be greater than a modulus of each of the plurality of adhesive layers. According to the above-mentioned embodiment, the flexible display may reduce leakage of the plurality of adhesive layers from the plurality of layers due to deformation of the flexible display, by the modulus of the coating member being greater than the modulus of each of the plurality of adhesive layers. The above-mentioned embodiment may have various effects including the effect mentioned above.

According to an embodiment, a bending rigidity of the first window may be greater than a bending rigidity of each of remaining windows excluding the first window among the plurality of windows. According to the above-mentioned embodiment, the flexible display may reduce delamination of the layers around the first window due to deformation of the flexible display, as the properties of the first adhesive layer disposed on the first surface of the first window, which has a relatively high rigidity, are different from the properties of the second adhesive layer disposed on the second surface of the second window, which has a rigidity lower than the rigidity of the first window. The above-mentioned embodiment may have various effects including the effect mentioned above.

According to an embodiment, the flexible display may further include a first region (e.g., the region 230a of FIG. 2A or the first region 511 of FIG. 8A) disposed on the second housing, and a second region (e.g., the region 230b of FIG. 2C or the second region 512 of FIG. 8A) that is rolled into the first housing or exposed to the outside of the first housing along the second housing moving with respect to the first housing. According to the above-mentioned embodiment, the flexible display may provide various user experiences to the user by including the deformable second region. The above-mentioned embodiment may have various effects including the effect mentioned above.

According to an embodiment, the second housing may be configured to be movable in a first direction (e.g., the first direction 261 of FIG. 2A) and a second direction (e.g., the second direction 262 of FIG. 2A) opposite to the first direction with respect to the first housing. The first housing may include at least one guide rail (e.g., the at least one guide rail 810 of FIG. 8A) supporting the flexible display to guide deformation of the flexible display. According to the above-mentioned embodiment, the electronic device may provide various user experiences to the user by including the second housing movable in the first direction and the second direction opposite to the first direction with respect to the first housing. The electronic device may reduce separation of the flexible display from the first housing by including the at least one guide rail. The above-mentioned embodiment may have various effects including the effect mentioned above.

According to an embodiment, the plurality of adhesive layers may further include a third region (e.g., the third region 550a of FIG. 8B) overlapping the at least one guide rail when viewing the flexible display from above, and a fourth region (e.g., the fourth region 550b of FIG. 8B) contacting the third region. A modulus of the third region may be greater than a modulus of the fourth region. According to the above-mentioned embodiment, the plurality of adhesive layers may reduce leakage of the plurality of adhesive layers from the plurality of layers due to deformation of the flexible display by including the third region having a relatively high modulus. The above-mentioned embodiment may have various effects including the effect mentioned above.

According to an embodiment, the third region may extend in a direction parallel to the first direction in the flexible display. According to the above-mentioned embodiment, the plurality of adhesive layers may reduce leakage of the plurality of adhesive layers from the plurality of layers due to deformation of the flexible display by including the third region having a relatively high modulus. The above-mentioned embodiment may have various effects including the effect mentioned above.

According to an embodiment, an electronic device may include a first housing, a second housing movable with respect to the first housing, and a flexible display at least partially deformable according to movement of the second housing and including a display panel and a plurality of layers disposed on the display panel. The plurality of layers may include a plurality of windows including a first window including a first surface facing the display panel, and a second window having a rigidity lower than a rigidity of the first window and including a second surface facing the display panel. The plurality of layers may include a plurality of adhesive layers at least partially disposed between the plurality of windows and including a first adhesive layer and a second adhesive layer. A thickness of the first adhesive layer disposed on the first surface may be greater than a thickness of the second adhesive layer disposed between the second surface of the second window facing the display panel, and a third surface opposite to the first surface of the first window. According to the above-mentioned embodiment, the electronic device may provide various user experiences to a user by including the flexible display that is at least partially deformable. The flexible display may reduce delamination of layers around the first window due to deformation of the flexible display, as the properties of the first adhesive layer disposed on the first surface of the first window, which has a relatively high rigidity, are different from the properties of the second adhesive layer disposed on the second surface of the second window, which has a rigidity lower than the rigidity of the first window. The above-mentioned embodiment may have various effects including the effect mentioned above.

According to an embodiment, the first window may include a first layer having a modulus within a range of 1Gpa or more and 7Gpa or less, and may have a thickness within a range of 100µm or more and 1mm or less. The thickness of the first adhesive layer may be positioned within a range of 50% or more and less than 100% of the thickness of the first window. The thickness of the second adhesive layer may be positioned within a range of 30% or more and 100% or less of the thickness of the first adhesive layer. According to the above-mentioned embodiment, the flexible display may reduce delamination of the layers around the first window due to deformation of the flexible display, as the properties of the first adhesive layer disposed on the first surface of the first window, which has a relatively high rigidity, are different from the properties of the second adhesive layer disposed on the second surface of the second window, which has a rigidity lower than the rigidity of the first window. The above-mentioned embodiment may have various effects including the effect mentioned above.

According to an embodiment, the first window may include a second layer having a modulus within a range of 60Gpa or more and 100Gpa or less, and may have a thickness within a range of 10µm or more and 200µm or less. The thickness of the first adhesive layer may be positioned within a range of 70% or more and 350% or less of the thickness of the first window. An adhesion of the second adhesive layer may be positioned within a range of 1% or more and 95% or less of an adhesion of the first adhesive layer. According to the above-mentioned embodiment, the flexible display may reduce delamination of the layers around the first window due to deformation of the flexible display, as the properties of the first adhesive layer disposed on the first surface of the first window, which has a relatively high rigidity, are different from the properties of the second adhesive layer disposed on the second surface of the second window, which has a rigidity lower than the rigidity of the first window. The above-mentioned embodiment may have various effects including the effect mentioned above.

According to an embodiment, the flexible display may further include a coating member contacting at least a portion of the first adhesive layer and the second adhesive layer for reducing leakage of adhesive material from the flexible display. According to the mentioned embodiment, the flexible display may reduce leakage of the plurality of adhesive layers from the plurality of layers due to deformation of the flexible display, by including the coating member. The above-mentioned embodiment may have various effects including the effect mentioned above.

According to an embodiment, a bending rigidity of the first window may be greater than a bending rigidity of each of remaining windows excluding the first window among the plurality of windows. According to the above-mentioned embodiment, the flexible display may reduce delamination of the layers around the first window due to deformation of the flexible display, as the properties of the first adhesive layer disposed on the first surface of the first window, which has a relatively high rigidity, are different from the properties of the second adhesive layer disposed on the second surface of the second window, which has a rigidity lower than the rigidity of the first window. The above-mentioned embodiment may have various effects including the effect mentioned above.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a first housing (210);
a second housing (220) movable with respect to the first housing (210); and
a flexible display (230, 510) at least partially deformable according to movement of the second housing (220) and including a display panel (521) and a plurality of layers (530) disposed on the display panel (521), and
wherein, the plurality of layers (530) includes:
a plurality of windows (540) including a first window (541) including a first surface (541a) facing the display panel (521), and a second window (542) having a rigidity lower than a rigidity of the first window (541) and including a second surface (542a) facing the display panel (521); and
a plurality of adhesive layers (550) at least partially disposed between the plurality of windows (540) and including a first adhesive layer (551) and a second adhesive layer (552); and,
wherein, properties of the first adhesive layer (551) disposed on the first surface (541a) of the first window (541) are different from properties of the second adhesive layer (552) disposed on the second surface (542a) of the second window (542).

2. The electronic device (101) of claim 1,
wherein, a thickness (d1) of the first adhesive layer (551), which is one of the properties of the first adhesive layer (551), is greater than a thickness (d2) of the second adhesive layer (552), which is one of the properties of the second adhesive layer (552).

3. The electronic device (101) of claims 1 or 2,
wherein, the first window (541) includes a first layer (610) having a modulus within a range of 1Gpa or more and 7Gpa or less, and has a thickness (d3) within a range of 100µm or more and 1 mm or less, and
wherein, the thickness (d1) of the first adhesive layer (551) is positioned within a range of 50% or more and less than 100% of the thickness (d3) of the first window (541).

4. The electronic device (101) of any one of claims 1 to 3,
wherein, the second adhesive layer (552) is disposed between a third surface (541b) opposite to the first surface (541a) of the first window (541) facing the display panel (521), and the second surface (542a) of the second window (542) facing the display panel (521), and
wherein, the thickness (d2) of the second adhesive layer (552) is positioned within a range of 30% or more and 100% or less of the thickness (d1) of the first adhesive layer (551).

5. The electronic device (101) of claims 1 or 2,
wherein, the first window (541) includes a second layer (620) having a modulus within a range of 60Gpa or more and Gpa100Gpa or less, and has a thickness (d3) within a range of 10µm or more and 200µm or less, and
wherein, the thickness (d1) of the first adhesive layer (551) is positioned within a range of 70% or more and 350% or less of the thickness (d3) of the first window (541).

6. The electronic device (101) of any one of claims 1 to 5,
wherein, the second adhesive layer (552) is disposed between a third surface (541b) opposite to the first surface (541a) of the first window 541 facing the display panel (521), and the second surface (542a) of the second window (542) facing the display panel (521), and
wherein, an adhesion of the second adhesive layer (552) is positioned within a range of 1% or more and 95% or less of an adhesion of the first adhesive layer (551).

7. The electronic device (101) of any one of claims 1 to 6,
wherein, the plurality of windows (540) further include at least one of acryl, elastomer, glass, polyimide (PI), polyethylene terephthalate (PET), polyethylene naphthalate (PEN), thermoplastic elastomer (TPE), thermoplastic polyurethane (TPU), and optically clear resin (OCR).

8. The electronic device (101) of any one of claims 1 to 7,
wherein, a width (w2) of the second window (542) is greater than or equal to a width of each of remaining layers excluding the second window (542) among the plurality of layers (530), and
wherein, the plurality of layers (530) further includes at least one step portion (710) disposed under the second window (542) and formed by at least a portion of the plurality of windows (540) and at least a portion of the plurality of adhesive layers (550).

9. The electronic device (101) of any one of claims 1 to 8,
wherein, the second adhesive layer (552) is disposed between a third surface (541b) opposite to the first surface (541a) of the first window (541) facing the display panel (521), and the second surface (542a) of the second window (542) facing the display panel (521), and
wherein, the flexible display (230, 510) further includes a coating member (720) contacting at least a portion of the first adhesive layer (551) and the second adhesive layer (552) for reducing leakage of adhesive material from the flexible display (230, 510).

10. The electronic device (101) of any one of claims 1 to 9,
wherein, a modulus of the coating member (720) is greater than a modulus of each of the plurality of adhesive layers (550).

11. The electronic device (101) of any one of claims 1 to 10,
wherein, a bending rigidity of the first window (541) is greater than a bending rigidity of each of remaining windows excluding the first window (541) among the plurality of windows (540).

12. The electronic device (101) of any one of claims 1 to 11,
wherein, the flexible display (230, 510) further includes:
a first region (230a; 511) disposed on the second housing (220); and
a second region (230b; 512) at least partially rolled into the first housing (210) or exposed to the outside of the first housing (210) along the second housing (220) moving with respect to the first housing (210).

13. The electronic device (101) of any one of claims 1 to 12,
wherein, the second housing (220) is configured to be movable in a first direction (261) and a second direction (262) opposite to the first direction (261) with respect to the first housing (210), and
wherein, the first housing (210) includes at least one guide rail (810) supporting the flexible display (230, 510) to guide deformation of the flexible display (230, 510).

14. The electronic device (101) of any one of claims 1 to 13,
wherein, the plurality of adhesive layers (550) further includes:
a third region (550a) configured to overlap the at least one guide rail (810) when viewing the flexible display (230, 510) from above, and
a fourth region (550b) contacting the third region (550a), and
wherein, a modulus of the third region (550a) is greater than a modulus of the fourth region (550b).

15. The electronic device (101) of any one of claims 1 to 14,
wherein, the third region (550a) extends in a direction parallel to the first direction (261) in the flexible display (230, 510).
